# EUROPEAN PATENT APPLICATION

(11) **EP 4 481 087 A1**
(43) Date of publication of application: **25.12.2024**
(21) Application number: 23180241.4
(22) Date of filing: 20.06.2023
(51) Int. Cl.: C25B 1/26, C25B 11/031, C25B 11/037, C25B 11/051, C25B 11/053, C25B 11/054, C25B 11/067, C25B 11/077, C25B 11/091

(54) **CATALYTIC ANODES AND PROCESSES FOR USE IN ELECTRO-CHLORINATION**

(71) Applicant: Infineum International Limited, Abingdon Oxfordshire OX13 6BB (GB)
(72) Inventor: Schwarz, Andrew, Abingdon, OX13 6BD (GB); Choi, Zungsun, 098632 Singapore (SG); Lee, ChoongHyuk, Daejeon (KR); Choi, Jaeho, Daejeon (KR); Kim, Young, Daejeon (KR); Nam, Ki Tae, 08826 Seoul (KR); Choi, Seungwoo, 08826 Seoul (KR); Park, Sunghak, 08826 Seoul (KR); Cho, Kang Hee, 08826 Seoul (KR)
(74) Representative: Hart, Richard Joseph

(57) **Abstract**

The present invention relates to catalytic anodes for use in electro-chlorination systems which generate chlorine from aqueous solutions via the chlorine evolution reaction. These anodes comprise an electrically conductive composite metallurgical layer comprising a specific structural base composition to support the catalyst, this base composition essentially comprising ruthenium, tin and titanium, and a specific catalyst composition essentially comprising crystalline cobalt oxide particles. The desired characteristics of this composite metallurgical layer may be realised via a process of preparation employing specific control of reactants and process conditions.

## Description

The present invention relates to catalytic anodes for use in electro-chlorination systems which generate chlorine from aqueous solutions containing chloride ions, via the chlorine evolution reaction. Such chlorine-generating systems are especially useful in the industrial treatment and purification of waste water, such as ballast water treatment systems and industrial and municipal water. They may also particularly be utilised in the industrial production of chlorine in the chlor-alkali process.

The chlorine evolution reaction ("CER") is a well-known reaction in industrial chemistry, which finds application in both the large-scale generation of chlorine for capture, and in the generation of chlorine for immediate applications. The chlor-alkali process generates chlorine and sodium hydroxide through the electrolysis of sodium chloride aqueous solutions; the products are recovered and put to subsequent industrial use. Chlorine is also an effective biocide, and consequently electro-chlorination systems are also independently used for water purification based on *in situ* generation of aqueous chlorine and its biocidal effect. Microbially-contaminated water can be effectively treated by electro-chlorination, which is deployed in a variety of settings such as industrial waste water and general water sanitation. In addition, ships increasingly carry on-board ballast water treatment systems to treat ballast tank water before discharge. Ships travelling long distances having the potential to introduce alien aquatic organisms into local ecosystems via the discharge of ballast water acquired far away. The invading alien species can cause considerable impact to local ecosystem balance. Electro-chlorination systems driven by electrical generators on board the ship offer an effective and immediate solution for treating such water before discharge.

The effective industrial use of electro-chlorination systems and processes relies on an electrolytic cell that can operate efficiently for extended periods. To promote the generation of chlorine at the anode, it is common in the art to deploy catalytic coatings on the electrolyte-facing surface of the anode to catalyse the chlorine evolution reaction. Such catalytic coatings typically comprise significant amounts of one or more precious metals, of which the most commonly used are iridium and ruthenium, thereby adding significant cost and complexity to anode manufacture. There remains in the art an ongoing need for new catalytic anodes which can more cost-effectively meet the various technical considerations relevant to an industrial or municipal electro-chlorination environment.

In selecting catalytic coatings for electro-chlorination anodes, a variety of technical considerations must be taken into account.

Firstly, the catalyst chosen must be sufficiently selective for the chlorine evolution reaction, so as to reduce the loss of efficiency that results from the competing oxygen evolution reaction, which can otherwise also occur at the anode from the electrolytic splitting of the water in aqueous solutions. Secondly, the catalytic coating must be sufficiently durable to withstand long-term operation and the acidification of electrolyte that can occur with electro-chlorination. Durability also requires good mechanical adhesion of the catalyst to the anode substrate surface. Thirdly, the anode coating should be highly conductive, to improve electrical efficiency by avoiding the need for large over-potentials to drive the electrolytic cell. In practice, some degree of overpotential is typically evident in electrolytic cells due to efficiency losses; lower degrees of over-potential, however, provide important relative efficiency gains, and the maintenance of lower over-potentials over extended operation provides another relevant measure of electrode durability and useful lifetime.

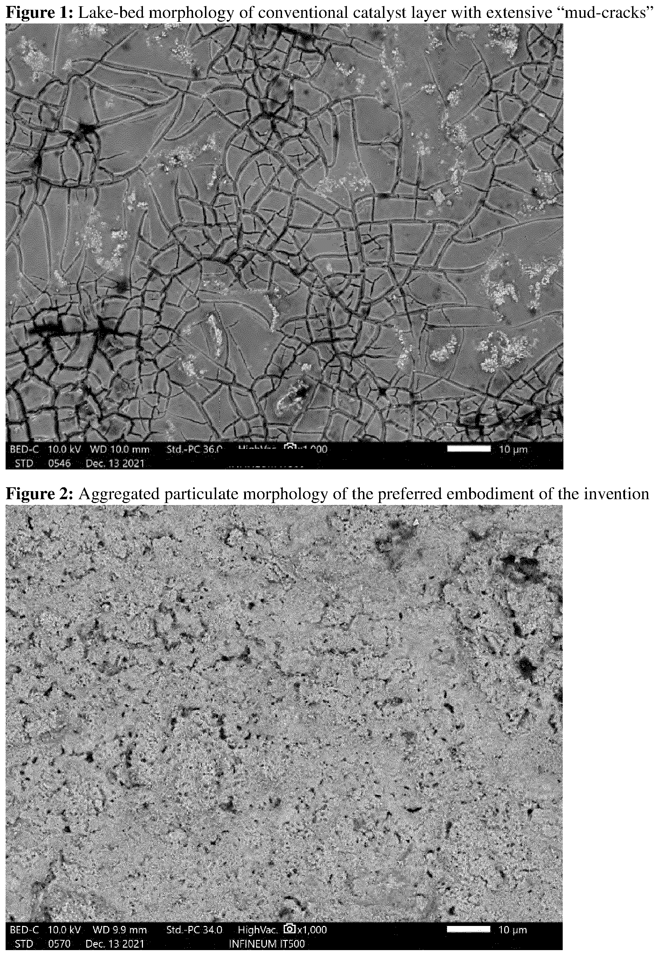

The physical durability of the catalytic coating on the anode can be assessed both by its performance in long-term tests and also by inspection of its morphology, most suitably by scanning electron microscopy. In practice, catalytic anode coatings in the art typically show an outer surface morphology that resembles a dry lake-bed, having the appearance of finely-deposited sediment extensively interrupted by characteristic "mud-cracks" as illustrated in Figure 1. These cracks provide weak points in the catalyst layer, and allow the penetration of electrolyte and reactive species down towards the substrate of the anode, resulting in degradation processes that weaken the adhesion of the catalyst to the substrate and attack the exposed compositions. Loss of electrical efficiency (as evidenced, for example, by increases in over-potential) and loss of catalytic activity typically result and reduce the useful life of the anode, leading to costly replacement.

The catalytic anodes of the first aspect of the invention, being obtainable by the process of the second aspect of the invention, provide an advantageous balance of properties addressing these technical demands of such anodes, whilst avoiding the need for costly precious metals, especially iridium. In particular, the catalyst-coated anode structures defined in the first aspect of the present invention show high catalytic activity and selectivity for the chlorine evolution reaction, show excellent durability in terms of operating lifetime and mechanical adhesion of the catalyst to the anode surface, and show improved resistance to acids formed during operation. They also possess high anode conductivity, resulting in efficient electrical operation without excessive over-potential, maintained over extended running periods.

These advantages of the first aspect of the present invention result from the deployment of an electrically conductive composite metallurgical layer of defined morphology and composition overlying the electrolyte-facing surface of the anode, this composite layer comprising a specific structural base composition to support the catalyst, and a specific catalyst composition essentially comprising crystalline cobalt oxide particles. The characteristic morphology and chemical composition of this composite metallurgical layer is best realised via a process of preparation employing the control of reactants and process conditions further defined in the second aspect of the present invention.

The present invention accordingly provides, in a first aspect, a catalytic anode structure for use in an electro-chlorination system comprising an electrically conductive solid substrate overlaid, on its electrolyte-facing surface, with an electrically conductive composite metallurgical layer, this layer comprising:
a structural base composition coating the substrate surface, the structural base composition having the morphology of aggregated particles interspersed with voids, and comprising metal oxide compounds of ruthenium, tin and titanium; and
a catalyst composition comprising cobalt oxide crystalline particles distributed on the upper surface of, and within the voids of, the structural base composition; and
wherein the cobalt is present in an amount of at least 12.5 atom% of the total metal atom content of the composite metallurgical layer; and the ruthenium and tin are present in amounts providing the composite metallurgical layer with an overall metallic stoichiometric ratio for Ru : Sn of 1 : ≥1 based on the total content of ruthenium and tin in the composite metallurgical layer; and
wherein the outer surface of the composite metallurgical layer has the morphology of a continuous coating of aggregated particles.

In the anode of the first aspect, the catalyst composition preferably further comprises one or more noble metals or the oxide compound(s) thereof and, in particular, preferably further comprises ruthenium or an oxide thereof.

Within this specification, the term "atom% of the total metal atom content" in relation to a specified metal in a composition refers to the number of atoms of that metal that are present in the relevant composition, expressed as the percentage of the total number of atoms of metallic elements that are present in the relevant composition, and irrespective of whether such metallic elements are present in elemental or compound form.

Within this specification, the term "overall metallic stoichiometric ratio" for particular metallic elements means the stoichiometric ratio of all atoms of those metallic elements present within the composite metallurgical layer (or other composition, where applicable), irrespective of whether such metallic elements are present in elemental or compound form. For example, in a structure containing 15 atom% of ruthenium and 15 atom% of tin in purely elemental form, the overall metallic stoichiometric ratio for Ru : Sn is 15:15 or 1:1; and in a structure containing 15 atom% of ruthenium in the form of elemental ruthenium, 15 atom% of elemental tin, and a further 15 atom% of tin compounded in oxide form, the overall metallic stoichiometric ratio for Ru : Sn is 15 : (15+15) or 1:2.

Within this specification, the term "morphology" is used to denote the three-dimensional structure and appearance of the material in question. The morphology can most usefully be identified by scanning electron microscopy as hereinafter described, which provides three-dimensional imaging of the material surface in a way that allows direct visual recognition of its structure and appearance.

Preferably, the morphology of the structural base composition is sufficiently interspersed with voids to render the base composition porous to the catalyst composition, allowing particularly extensive penetration of the catalyst composition down through the thickness of the base composition when applied.

Also within this specification, the term "continuous coating" in relation to the first aspect of the invention is used to denote a coating that completely covers the underlying material. Preferably, this continuous coating is uninterrupted by significant cracking or other penetrating discontinuities that weaken its integrity. In particular, the continuous coating of the first aspect of the invention does not exhibit the extensive "mud-cracked" sediment morphology of conventional catalytic coatings used in electro-chlorination, but instead provides a continuous surface covering or layer composed of a three-dimensional matrix of aggregated particles, as visible under scanning electron microscopy.

The present invention is based, in part, on the finding that an anode structure having excellent properties for obtaining the CER reaction in electro-chlorination can be advantageously obtained through the combination of a specific structural base composition comprising tin in combination with ruthenium and titanium coating the anode substrate surface, and an overlying CER catalyst composition based essentially on cobalt oxide. The resulting composite metallurgical layer on the anode provides the anode with a surface chemical composition and advantageous morphology that achieves excellent durability, in terms of operating lifetime and mechanical adhesion of the catalyst to the anode substrate, and offers advantageous catalytic activity and selectivity for the chlorine evolution reaction. The composite metallurgical layer also offers the anode high resistance to acid attack, and a high conductivity leading to high electrical efficiency and operating performance at low over-potentials for extended periods. The use of a catalyst composition based largely upon cobalt oxide in preference to higher quantities of precious metals, in combination with the use of tin in the structural base composition, also enables this anode performance to be reached at substantially lower costs than conventional catalytic anodes based on iridium and/or ruthenium as the predominant components.

In particular, the structural base composition essentially comprises the combination of ruthenium, tin and titanium in metal oxide form, wherein the presence of a minimum proportion of ruthenium and the co-presence of tin in a stoichiometric amount equal to or exceeding the amount of ruthenium, in combination with titanium, provides a base composition capable of forming a structure having the morphology of aggregated particles interspersed with voids, as further demonstrated hereunder. Contrary to the conventional thinking in the art concerning barrier layers, the particulate morphology of the structural base composition contributes to improved mechanical adhesion of the composite metallurgical layer onto the substrate. This particulate base composition also provides an improved structural foundation for the catalyst composition on the anode, with the voids in the base composition allowing the catalyst composition to penetrate into the depth of the structural base layer in addition to continuously coating its outer surface, resulting in a highly-adherent composite metallurgical layer on the electrolyte-facing surface of the anode having the above-described highly advantageous combination of properties for the chlorine evolution reaction. This use of a defined composition comprising ruthenium, tin and titanium oxides as a structural base layer for an overlying catalytic composition also contrasts with the conventional use of one or more such oxides as primary catalytic components in catalyst compositions, and instead relies upon the particular morphology of the defined base composition to impart structural integrity to the composite metallurgical layer, so supporting the overlying cobalt-based catalyst composition.

In addition, the cobalt oxide crystalline particles distributed on the upper surface of, and within the voids of, the structural base composition, serve as the essential catalytic species of the composite metallurgical layer and provide highly selective catalysis for the CER reaction at substantially lower cost than precious-metal based catalyst compositions such as iridium-based compositions. Whilst the essential cobalt oxide catalyst of the present invention can be supplemented by catalytic precious-metal oxides, the cobalt should be present in an amount of at least 12.5 atom% of the total metal atom content of the composite metallurgical layer, and should represent the predominant catalytic species in the catalyst composition. This use of cobalt oxide as the predominant catalyst species is enabled by the combined use therewith of the defined structural base composition, the combination serving to provide a highly selective, durable and efficient cobalt oxide-based catalytic anode for CER having the above-described improved balance of properties.

The aggregated particles on the outer surface of the composite morphological layer are also essential for providing a highly effective and available surface area for catalytic activity. In particular, this particulate morphology overcomes the mass transfer limitations of conventional lake-bed sedimentary catalyst layers, enabling the catalytic anodes of the first aspect of the invention to operate a higher efficiency for the chlorine evolution reaction and contributing to the various advantages of the invention.

The efficiency advantage for the catalytic anode of the present invention in the chlorine evolution reaction is particularly demonstrated with aqueous solutions of chloride ions (such as brine) having low salt levels. Increased efficiency at low salt levels provides an electrode with wide suitability for water treatment, for example in municipal water applications or for treating drinking water, in addition to the treatment of waste water and other chlorination applications. The increased efficiency also results in lower levels of unwanted electrolysis byproducts such as chlorate and perchlorate ions.

In a preferred form of the catalytic anode of the first aspect, the catalyst composition of the composite metallurgical layer does not comprise titanium or a compound thereof. Such a titanium-free catalyst composition provides the resulting anode with the additional advantage of high suitability for use in current-reversal cells. Current reversal has become a maintenance-friendly means for removing deposits of metals such as calcium and magnesium, which may otherwise build up on the cathode during extended electrolytic operation, especially for treatment of municipal or residential water, such as swimming pools, in particular at low salt levels. However, reversing the current inside the cell conventionally causes more rapid degradation and damage to the anode catalytic coating, due to the wide swings in pH that occur at the surface of the electrode, and particularly within the cracked surface of a "mud-cracked" catalyst, where the electrolyte may be brine depleted and the competing water-splitting reaction therefore becomes more prevalent. Titanium present in the coating is susceptible to being dissolved away in this environment, leading to a weakening of the catalytic coating on the substrate and a rapid degradation of the coating and performance. The present invention provides an anode that, because of the high efficiency of its catalyst composition, can dispense with the presence of titanium in the catalyst composition and thereby avoid this degradation, leading to a longer anode lifetime, especially in current-reversal environments.

Such a titanium-free catalyst composition also provides the resulting anode with the additional advantage of greater resilience in high salt level processes, the chlor-alkali process. Typically, a chlor-alkali cell features a Teflon or similar membrane positioned between the cathode and anode. The caustic solution inside the cell can cause holes to develop in the membrane, allowing caustic to reach the anode and cause titanium attack and depletion. The present invention provides an anode that, because of the high efficiency of its catalyst composition, can dispense with the presence of titanium in the catalyst composition and thereby avoid this degradation, leading to a longer anode lifetime in this environment.

The formation of the catalytic anode structure of the first aspect of the invention is best realised through a process which sequentially adds the structural base composition and catalyst composition, under process conditions ideally favourable to the formation of the correct morphology of the base composition and composite metallurgical layer.

The present invention accordingly provides, in a second aspect, a process for the preparation of a catalytic anode structure for use in an electro-chlorination system, comprising the following sequential steps:
a) the preparation or obtention of an electrically conductive solid substrate;
b) the application, to the electrolyte-facing surface of the substrate, of an electrically conductive metallurgical composition (i) comprising compounds of ruthenium, tin and titanium in amounts providing the composition (i) with the overall metallic stoichiometry Ru_{≥0.3} (Sn+Ti)_{≤0.7};
c) the optional application, to the metallurgical layer resulting from the application of composition (i), of an electrically conductive metallurgical composition (ii) comprising one or more compounds of ruthenium; and
(d) the application, to the metallurgical layer resulting from the application of composition (i) or from the application of compositions (i) and (ii) where composition (ii) is optionally applied, of an electrically conductive metallurgical catalyst precursor composition (iii) comprising cobalt oxide crystalline particles;

wherein the process solvent used for applying the metallurgical compositions in steps (b) and (d), and optionally step (c), is a mixture of isopropanol and water in the ratio range of 80:20 to 95:5 by volume; and
wherein the resulting structure is thereafter dried, and then heat-treated at a temperature of at least 450°C.

The process of the second aspect is particularly characterised by its use of particular starting metallurgical compositions and preparative conditions, which give rise to the anode structure of the first aspect.

Firstly, the use of an electrically conductive metallurgical composition (i) comprising compounds of ruthenium, tin and titanium in amounts providing the starting composition (i) with the overall metallic stoichiometry Ru , _{0.3} (Sn+Ti)_{≤0.7} gives rise, under the process conditions of the second aspect, to the structural base layer of the composite metallurgical layer of the anode which provides the advantageous foundation for the overlaid catalyst composition. The defined overall metallic stoichiometry of the starting composition (i) particularly results in the desired morphology of the resulting structural base layer, being a layer having the morphology of aggregated particles interspersed with voids. This formation of the desired base composition morphology is further assisted by the use of the defined process solvent and, in some preferred embodiments, by the anode substrate being heated during the application step (b) to a temperature in the range of 50-200°C

During the application step (b), the use of process solvent volatile under that condition further enables the formation of voids in the structural base layer into which the catalyst composition (iii) subsequently applied in step (d) (and the optional composition (ii) applied in step (c)) can advantageously penetrate. This solvent also results in the concomitant loss of a certain proportion of more volatile metallic salts contained within the defined metallurgical content of the starting composition (i), resulting in the formation of a metallurgical layer with overall metallic stoichiometry different in respect of ruthenium, tin and titanium to that of the starting composition (i). The use of the defined composition (i) and the defined process conditions is believed to advantageously accommodate for this concomitant metal salt volatility loss, and results in the formation of an applied metallurgical layer having the desired composition and morphology.

During application step (d) (and, where present, optional application step (c)) the specified process solvent, and subsequent heat-treatment of the resulting structure, also contribute to the formation of the advantageous morphology and composition of the resulting composite metallurgical layer on the anode of the invention.

In a preferred embodiment, applying the metallurgical compositions (i) and (iii) (and where present, composition (ii)) to a substrate that is heated to the specified temperature range of 50-200 °C during that application process (and preferably heated to that temperature range throughout that application process) has been found to further enhance the formation of the desired composite metallurgical layer on the anode.

The drying of the resulting structure at the same temperature range of of 50-200 °C has also been found to further enhance the formation of the desired composite metallurgical layer, in particular by favouring the formation of the desired morphology of a continuous layer uninterrupted by mud-cracks or other significant penetrating discontinuities.

The final heat-treatment of the resulting structure at a temperature of at least 450°C has importantly been found essential to enhance the formation of the desired composite metallurgical layer, in particular by favouring the improvement in mechanical adhesion of the composite metallurgical layer to the anode substrate, and by favouring high selectivity for the chlorine evolution reaction over the oxygen evolution reaction from water splitting. In this regard the second aspect of the invention prefers a final heat-treatment in the range of 450 to 600°C, and especially an optimal final heat-treatment at 500°C, wherein higher selectivity for the chlorine evolution reaction and mechanical adhesion is observed.

The second aspect of the invention also essentially requires the use of a specified process solvent for applying the metallurgical compositions in steps (b) and (d), and optionally step (c), this process solvent being a mixture of isopropanol and water in the ratio range of 80:20 to 95:5 by volume, and preferably in the ratio range of 82.5:17.5 to 87.5 to 12.5 by volume. Most preferably, the process solvent is a mixture of isopropanol and water in the ratio of 85:15 by volume. This composition of process solvent has been found to show advantages over similar alcoholic solvents for solvency of the starting compounds used in the process of the second aspect. In addition, this composition of process solvent has been found to advantageously control the surface morphology of the layer formed by the application of the metallurgical compositions, both before and after the final heat-treatment step, and in particular contributes to the aggregated particulate morphology of the structural base composition, free of integrity-weakening cracks. This ability to control layer morphology is particularly attributed to the choice of alcohol and the ratio of alcohol to water in the process solvent, and is optimally controlled at the volume ratio of 85:15 (isopropanol: water).

Further aspects of the present invention are also described hereunder, and include:
an electro-chlorination system comprising the electrolytic anode structure of the first aspect, or obtainable by the process of the second aspect; and
an electrolytic process for the catalytic evolution of chlorine gas from an aqueous solution containing chloride ions, which comprises passing an electrical current through said solution in an electrolytic cell comprising the electrolytic anode structure of the first aspect or obtainable by the process of the second aspect, wherein chlorine gas is evolved from the aqueous solution at the anode.

In a preferred aspect of the electrolytic process, the chlorine gas evolved by the process is used as a biocide to disinfect water, and more especially used to disinfect ballast water or industrial waste water, or municipal or domestic water, such as recreational water in swimming pools and domestic drinking water. In an alternative preferred aspect, the process is a chlor-alkali process for the generation and recovery of chlorine.

The invention will now be described in more detail as follows:

### Brief description of the Figures

In this application, the following figures are included:
**Figure 1****:** Lake-bed morphology of conventional catalyst layer with extensive "mud-cracks";
**Figure 2****:** Aggregated particulate morphology of the preferred embodiment of the invention;
**Figures 3 and 4****:** TOF-SIMS (Time-Of-Flight Secondary Ion Mass Spectrometry) concentration-depth profile for preferred embodiments of the invention;
**Figure 5****:** Anode lifetime tests - effect of ruthenium stoichiometry in composition (i) of the process on structural base composition durability;
**Figure 6****:** Anode lifetime tests - effect of structural base metal composition;
**Figures 7(a), (b)** **and (c):** Scanning Electron Microscope (SEM) examination after application to the substrate of comparative base compositions;
**Figure 8****:** Anode lifetime improvement from the presence of the base structural layer;
**Figure 9****:** further advantage from the application of optional composition (ii) to the anode according to the process of the invention;
**Figure 10****:** Anode lifetime improvement from the preferred inclusion of tin and antimony in the defined stoichiometry in composition (iii) of the process; and
**Figures 11(a) and (b):** CER efficiency and lifetime improvements from the inclusion of tin and antimony in the defined stoichiometry in composition (iii) of the process.

### First aspect of the invention (catalytic anode)

The catalytic anode structure of the first aspect comprises an electrically conductive solid substrate overlaid, on its electrolyte-facing surface, with an electrically conductive composite metallurgical layer, this layer comprising:
a structural base composition coating the substrate surface, the structural base composition having the morphology of aggregated particles interspersed with voids, and comprising metal oxide compounds of ruthenium, tin and titanium; and
a catalyst composition comprising cobalt oxide crystalline particles distributed on the upper surface of, and within the voids of, the structural base composition; and
wherein the cobalt is present in an amount of at least 12.5 atom% of the total metal atom content of the composite metallurgical layer; and the ruthenium and tin are present in amounts providing the composite metallurgical layer with the overall metallic stoichiometric ratio for Ru:Sn of 1 : ≥1, based on the total content of ruthenium and tin in the composite metallurgical layer; and
wherein the outer surface of the composite metallurgical layer has the morphology of a continuous coating of aggregated particles.

The anode structures of the first aspect of the invention are obtainable by, and preferably obtained by, the process of the second aspect of the invention.

The anode structures of the first aspect possess the characteristic that the outer surface of the composite metallurgical layer has the morphology of a continuous coating of aggregated particles. The presence of occasional cracks or other surface discontinuities or fault lines is not excluded from this broadest scope of the first aspect, where such imperfections do not penetrate into the depth of the metallurgical layer beyond the catalytic composition or expose the underlying substrate to electrolyte attack. Preferably, however, the anode structures of the first aspect possess a composite metallurgical layer having the outer surface morphology of a continuous, uncracked coating of aggregated particles.

The aggregated particulate morphology of the outer surface of the composite metallurgical layer contrasts with the extensively cracked sediment-like surface morphology of conventional catalytic anodes, and can best be visualised by examination under scanning electron microscopy, as illustrated in the accompanying Figures. In each case, the scanning electron micrographs were obtained using a JSM-IT500 InTouchScope^{™} Scanning Electron Microscope instrument, using the settings stated in the legend of the relevant Figure.

In Figure 1, scanning electron microscopy of the outer surface morphology of a conventional catalysed anode for electro-chlorination reveals a characteristic "mud-cracking" appearance, with extensive deep cracking radiating across the sediment-like surface coating. Such a morphology renders the catalytic surface prone to chemical attack and weakens its structural integrity, reducing its lifetime and usefulness.

In contrast, in Figure 2, scanning electron microscopy illustrates the characteristic surface of the preferred catalysed anode of the first aspect, with a continuous uncracked surface layer and aggregated particulate morphology visible at the magnification shown.

An essential element of the anode structure of the first aspect is the presence of cobalt oxide present in an amount of at least 12.5 atom% of the total metal atom content of the composite metallurgical layer. The anode of the present invention provides a means to deploy a high level of cobalt-oxide based catalyst in a form highly selective for electro-chlorination in an anode that provides excellent durability, in terms of operating lifetime and mechanical adhesion of the catalyst to the anode substrate, high resistance to acid attack, and high conductivity, leading to high electrical efficiency and operating performance at low over-potentials. The use of a catalyst composition based upon cobalt oxide as the primary catalytic metal in preference to precious metals also enables this anode performance to be reached at substantially lower costs than conventional precious metal-based catalysts, such as iridium-based catalytic anodes.

Preferably, in the anode structure of the first aspect, the cobalt oxide is present in the highest amount practical to maximise its catalytic effect whilst obtaining the other advantages of the invention. Thus, it is preferred that cobalt is present in the amount of at least 15 atom% of the total metal atom content of the composite metallurgical layer, and more preferably in the amount of at least 20 atom% of the total metal atom content of the composite metallurgical layer. Even more preferably, cobalt is present in the amount of at least 30 atom% of the total metal atom content of the composite metallurgical layer, and most preferably in the amount of at least 40 atom% of the total metal atom content of the composite metallurgical layer. Ideally, cobalt is present in the amount of 50 to 80 atom% of the total metal atom content of the composite metallurgical layer, and optimally in the range of 60 to 75 atom% of the total metal atom content of the composite metallurgical layer. Such cobalt contents are advantageously achieved by preparing the anode structure in accordance with the process of the second aspect of the invention.

Also essential to the invention is the presence of ruthenium and tin in amounts providing the composite metallurgical layer with the overall metallic stoichiometric ratio for Ru : Sn of 1 : ≥1, based on the total content of ruthenium and tin in the composite metallurgical layer. An important finding of the invention is the advantageous use of tin in an overall stoichiometric quantity at least equivalent to the amount of ruthenium, which enables significant reduction in overall ruthenium content of the electrode coating whilst also contributing to the advantageous combination of properties shown by the composite metallurgical layer of the invention. In particular, the presence of the defined amount of tin assists with the mechanical integrity of the layer and its electrical conductivity.

The overall metallic stoichiometric ratio for Ru : Sn, based on the total content of ruthenium and tin in the composite metallurgical layer, is preferably 1 : ≥1.5, and more preferably 1 : ≥2. Even more preferably, the overall metallic stoichiometric ratio for Ru: Sn, based on the total content of ruthenium and tin in the composite metallurgical layer, is 1 : ≥3, and most preferably 1 : ≥5. Optimal values for this ratio in the present invention lie in the range of 1:8 to 1:20, for example in the range of 1:8 to 1:15.

The above preferred ranges for cobalt content and overall metallic stoichiometric ratio for Ru : Sn in the composite metallurgical layer may be combined to optimum effect in the anode structure of the first aspect of the invention. In particular, more preferred embodiments of the first aspect include:
1) the anode structure of the first aspect, wherein cobalt is present in the amount of at least 15 atom% of the total metal atom content of the composite metallurgical layer, and the overall metallic stoichiometric ratio for Ru: Sn, based on the total content of ruthenium and tin in the composite metallurgical layer, is 1 : ≥1.5; more preferably
2) the anode structure of the first aspect, wherein cobalt is present in the amount of at least 20 atom% of the total metal atom content of the composite metallurgical layer, and the overall metallic stoichiometric ratio for Ru: Sn, based on the total content of ruthenium and tin in the composite metallurgical layer, is 1 : ≥1.5 or, more advantageously, 1: ≥2; more preferably
3) the anode structure of the first aspect, wherein cobalt is present in the amount of at least 30 atom% of the total metal atom content of the composite metallurgical layer, and the overall metallic stoichiometric ratio for Ru: Sn, based on the total content of ruthenium and tin in the composite metallurgical layer, is 1 : ≥1.5 or, more advantageously, 1: ≥2, and most advantageously 1: ≥3; more preferably
4) the anode structure of the first aspect, wherein cobalt is present in the amount of at least 40 atom% of the total metal atom content of the composite metallurgical layer, and the overall metallic stoichiometric ratio for Ru: Sn, based on the total content of ruthenium and tin in the composite metallurgical layer, is 1 : ≥1.5 or, more advantageously, 1: ≥2, most advantageously 1: ≥3, and ideally 1: ≥5; and most preferably
5) the anode structure of the first aspect, wherein cobalt is present in the amount of 50 to 80 atom% of the total metal atom content of the composite metallurgical layer, and the overall metallic stoichiometric ratio for Ru: Sn, based on the total content of ruthenium and tin in the composite metallurgical layer, is 1 : ≥1.5 or, more advantageously, 1: ≥2, most advantageously 1: ≥3, and ideally 1: ≥5.

A particularly preferred anode structure of the first aspect is that wherein cobalt is present in an amount of at least 40 atom% of the total metal atom content of the composite metallurgical layer; and the ruthenium and tin are present in amounts providing the composite metallurgical layer with the overall metallic stoichiometric ratio for Ru : Sn of 1: ≥5, based on the total content of ruthenium and tin in the composite metallurgical layer.

Optimal anode structures of the first aspect are those wherein cobalt is present in an amount of 50 to 80 atom% of the total metal atom content of the composite metallurgical layer; and the ruthenium and tin are present in amounts providing the composite metallurgical layer with the overall metallic stoichiometric ratio for Ru : Sn of 1: ≥5, and optimally in the range of 1:8 to 1:15, based on the total content of ruthenium and tin in the composite metallurgical layer.

The individual metal contents and overall metallic stoichiometry of the composite metallurgical layer can be measured by known techniques using ICP-MS (Inductively coupled plasma mass spectrometry in order to determine the compositional features of the invention.

In the anode structure of the first aspect, it is preferred that the cobalt oxide crystalline particles in the catalyst composition consist essentially of crystalline cobalt oxide having the chemical formula Co₃O₄. In one such embodiment, these cobalt oxide crystalline particles may consist of crystalline cobalt oxide having the chemical formula Co₃O₄. The presence of this crystalline form of cobalt oxide may be confirmed by X-ray diffraction or other conventional crystallographic techniques. The Co₃O₄ crystalline particles may be sized by direct measurement of their diameters in transmission electron micrograph images, and preferably to range in diameter from 1nm to 20nm, more preferably from 1nm to 10nm, and most preferably from 3 to 7nm in diameter.

In the anode of the first aspect, the catalyst composition preferably further comprises one or more noble metals or the oxide compound(s) thereof and, in particular, ruthenium or an oxide thereof. In keeping with the object of the invention, the amount of any included noble metals shall be small enough as to not reduce the cobalt content of the composite metallurgical layer below the level prescribed by the invention, and the amount of noble metal shall preferably not exceed 10 atom%, and more preferably not exceed 5 atom%, of the total metal atom content of the composite metallurgical layer.

In a more preferred embodiment, the cobalt oxide crystalline particles in the catalyst composition consist essentially of crystalline cobalt oxide having the chemical formula Co₃O₄, and further consist essentially of ruthenium or an oxide thereof to the level of at most 5 atom % of ruthenium based on the total metal atom content of the crystalline particles, with at least some of said ruthenium preferably being present in the form of surface decoration on the crystalline particles. In this latter embodiment of the anode, the cobalt oxide crystalline particles in the catalyst composition may further contain crystalline regions wherein, in addition to surface decoration, ruthenium is incorporated within the crystal lattice of the cobalt oxide, or has formed a mixed metal oxide with cobalt, or both.

The limited quantity of ruthenium provided for in these embodiments in association with the cobalt oxide crystalline particles in the catalyst composition provides the advantage of further improving the properties of the composite metallurgical layer on the anode, most notably improving the selectivity of the catalyst for the chlorine evolution reaction, and improving durability of the anode, particularly in terms of operational lifetime. The ruthenium may be present in oxide compound form or in metallic elemental form, at least in the case of incorporation within the crystal lattice of the cobalt oxide. The ruthenium associated with the cobalt oxide catalyst in these embodiments may be present in an overall non-stoichiometric proportion, approximating to a mixture of elemental and oxide-bound ruthenium.

However, exceeding the upper limit of 5% for ruthenium content in the crystalline particles of the catalyst composition has been found to result in a reduction on the efficiency of the chlorine evolution reaction, especially for water treatment applications, as evidenced by a decrease in the low salt efficiency. For this reason the ruthenium content associated with the cobalt oxide catalytic particles should be limited to the stated level, and it is not advantageous to increase ruthenium content further in any expectation of further improvement.

In all the above embodiments of the anode of the first aspect, the composite metallurgical layer comprises a catalyst composition comprising cobalt oxide crystalline particles distributed on the upper surface of, and within the voids of, the structural base composition. It is preferred that the catalyst composition consists essentially of cobalt oxide crystalline particles distributed in a matrix of other metal oxides, especially a crystalline matrix of other metal oxides, especially wherein the other metal oxides do not comprise substantial or any amounts of precious metal oxides such as palladium or iridium, other than as provided herein in relation to the present invention.

In particular, it is preferred in all embodiments of the anode that the catalyst composition comprises, and preferably consists essentially of, cobalt oxide crystalline particles within a crystalline matrix of oxides of antimony and tin; this catalyst composition being present on the upper surface of, and within the voids of, the structural base composition. In such embodiments of the anode, it is preferred that the overall metallic stoichiometric ratio of cobalt : total antimony and tin in the composite metallurgical layer is in the range of 2:1 to 9:1of More preferably, this overall metallic stoichiometric ratio of cobalt : total antimony and tin in the composite metallurgical layer is in the range of 2.5:1 to 6:1, and most preferably in the range of 3:1 to 5:1. Optimally, the composite metallurgical layer is in the range of 3:1 to 4:1. It has surprisingly been found that the overall metallic stoichiometric ratio of cobalt: total of antimony and tin in the composite metallurgical layer provides advantageous performance. By maintaining this ratio within the above general range, the durability of the catalytic anode is improved as evidenced by an increase in its useful lifetime of operation. This increase in lifetime provides the anode of the first aspect with highly advantageous performance.

In the above anode embodiments, it is more preferred that the compounds of antimony and tin serving as the matrix in the catalyst composition are also present in amounts providing the composite metallurgical layer with an overall metallic stoichiometric ratio of antimony : tin of in the range of 1:5 to 1:200, and preferably in the range of 1:5 to 1:100.

In this regard, it has further been surprisingly found that the overall metallic stoichiometric ratio of antimony : tin in the composite metallurgical layer provides a further contribution to obtaining optimal anode performance. Maintaining this overall metallic stoichiometric ratio within the above range provides the anode with further improved lifetime of operation, and also improves the CER efficiency of the cell, as evidenced by Faradic Efficiency.

It is preferred in this regard that the compounds of antimony and tin are present in amounts providing the composite metallurgical layer with a preferred overall metallic stoichiometric ratio of antimony : tin in the range of 1:25 to 1:100, and most preferably in the range of 1:30 to 1:85. Optimally this ratio may be in the range of 1:50 to 1:85, with excellent embodiments at 1:75 and 1:84.

In each of the above embodiments of the anode structure, it is preferred the composite metallurgical layer further comprises at least one compound of palladium in an amount providing an overall palladium content of at most 7 atom% of the total metal atom content of the composite metallurgical layer. The introduction of a limited quantity of palladium to the composite layer is preferably done via the inclusion of one or more palladium-based compounds in the catalyst composition, or via subsequent doping. The palladium provides a further improvement in the efficiency of the chlorine evolution reaction, particularly for water treatment applications, as evidenced by an increase in low salt efficiency.

However, exceeding the upper limit of 7 atom% for palladium content in the catalyst composition results in no further improvement of the efficiency of the chlorine evolution reaction, especially for water treatment applications, as evidenced by no further increase in low salt efficiency. For this reason, the palladium content associated with the cobalt oxide catalytic particles should be limited to the stated level to avoid unnecessary cost and complexity. It is preferred that overall palladium content is at most 5 atom%, and more preferably at most 3%, of the total metal atom content of the composite metallurgical layer; and optimally the overall palladium content is at most 1.5 % of the total metal atom content of the composite metallurgical layer.

The anode of all embodiments of the first aspect essentially consists of an electrically conductive solid substrate, which substrates are known in the art. This substrate preferably consists essentially of a valve metal, such as titanium, zirconium, niobium and tantalum (and alloys/mixtures containing these metals) and preferably titanium, and most preferably consists essentially of titanium. Mixtures of valve metals may be present in the substrate. Oxides of the valve metal or metals essentially present in the substrate may additionally be observed or produced as artifacts under the conditions of anode manufacture and use, particularly at the surface of the substrate or its interface with the composite metallurgical layer, and their presence is not excluded from the substrates of the invention provided that they do not form the primary compositional component of the substrate.

The anode substrate may be produced by means conventional in the art, and may be purchased or manufactured to order and be formed into any shape suitable for eventual application as an anode in an electrochemical cell or system. In particular, the substrate may be formed into meshes, plates and more complex three-dimensional shapes such as cylinders. The substrates may be coated by the composite metallurgical layer on one or more sides depending on their design and arrangement.

In the anode of all embodiments of the first aspect, the distribution of the cobalt oxide-based catalyst composition extends down into the depth of the composite metallurgical layer as it penetrates and occupies the voids of the structural base composition. The distribution of metallic elements through the thickness of the structure of the composite metallurgical layer in accordance with the present invention can be visualised by imaging using a transmission electron microscope (TEM) according to the mapping technique TEM-EDS (Transmission Electron Microscopy and Energy Dispersive X-ray Spectroscopy).

Using the TEM-EDS technique, the distribution of various essential compositional metals can be imaged directly, and their distribution observed within the thickness of the composite metallurgical layer to confirm the presence of an anode structure of the present invention, especially when compared with an overall image obtained by HAADF (High-Angle Annular Dark Field transmission electron microscopy). Using the TEM-EDS mapping technique, each metallic element can be individually visualised within the composite metallurgical layer. In particular, the cobalt of the cobalt oxide particles is readily observed in a dense concentration (coating) on the outer surface of the composite layer, but cobalt is additionally evident at lower density throughout the depth of the composite layer due to penetration into the base composition according to the invention. The ruthenium, present in the catalyst composition at a lower level than the structural base composition, accordingly appears at lower density on TEM-EDS in the surface region of higher cobalt catalyst density, and at higher density in the region of the base composition; whilst the titanium of the base composition is largely confined to that region of the composite layer and shows little migration to the concentration of catalyst composition on the surface. Tin is distributed throughout the layer, being present both in the base composition and in the antimony-tin matrix of the catalyst composition.

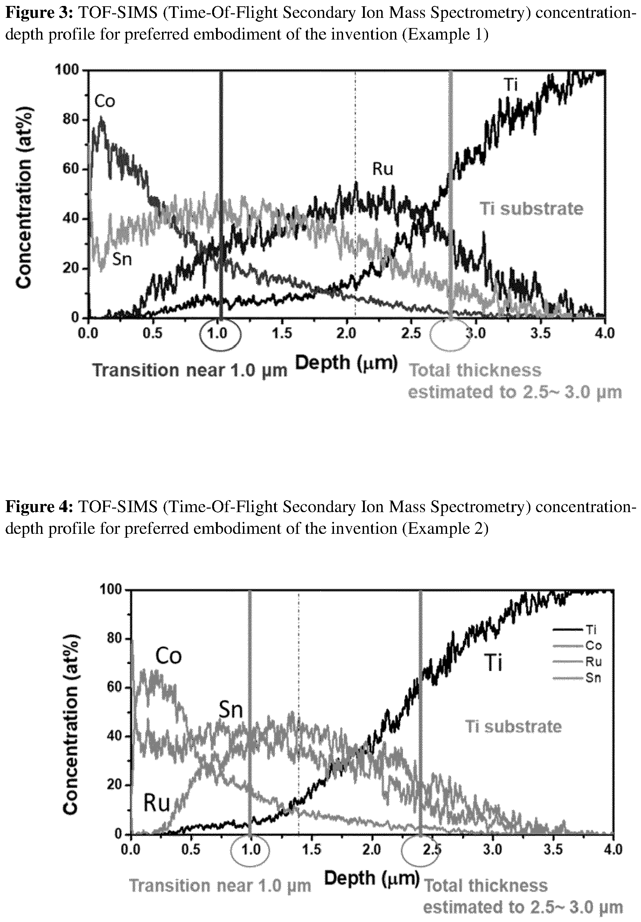

The distribution and concentration of metallic elements throughout the composite metallurgical layer can also be measured quantitatively using the technique TOF-SIMS (Time-Of-Flight Secondary Ion Mass Spectrometry). This technique allows the mapping of metal concentrations down through the depth of the composite metallurgical layer and can also confirm the presence of the structure of the present invention, as illustrated in Figures 3 and 4 which map the concentration of titanium, ruthenium, tin and cobalt through the depth of the composite metallurgical layer of corresponding samples of the present invention.

In more detail, a sample for TOF-SIMS is prepared by cutting 1cm² samples of the coated electrode for SIMS loading, TOF-SIMS analysis being performed using the ion source: Cs+ ion, Current: 3 keV, 20nA, Sputter area: 150 µm × 150 µm, with the detection ion as Cs+ adsorbed secondary ions (Cs+-metal) to minimize any matrix effect. The depth measurement is determined after sputtering for depth calculation. A quantitative calculation method is employed, whereby RSF (Relative sensitivity factor) is calculated from the formula:
Intensity / concentration = RSF

Each metal element's concentration is acquired by ICP-MS, and used to calculate RSF, along with each element's intensity (at depth) from TOF-SIMS to derive the depth profile of each metal.

In the anodes of the first aspect, it is preferred that the cobalt of the catalyst composition is distributed non-uniformly through the thickness of the composite metallurgical layer, the concentration of cobalt oxide being higher in the composite metallurgical layer adjacent to its outer surface than adjacent to the substrate surface, as determined for example by the above techniques. Such a preferred embodiment is illustrated in Figures 3 and 4, which shows the characteristically non-uniform distribution of the cobalt through the depth of the composite metallurgical layer.

In a further-enhanced embodiment of the anode of the first aspect, the composite metallurgical layer further comprises ruthenium oxide distributed throughout, or substantially throughout, both the base structural composition and the catalyst composition. In particular, it is preferred that the ruthenium oxide be distributed in the matrix of the catalyst composition, and more preferred that it be distributed in the preferred catalyst matrix of antimony and tin oxides described hereinbefore. The inclusion of ruthenium oxide throughout or substantially throughout the composite metallurgical layer further improves the electrical conductivity of the layer and increases the low-salt efficiency of the anode, and also improves the long-term durability of the anode structure.

The ruthenium oxide may most advantageously be included into the composite metallurgical layer by way of application as an intermediate layer (or "interlayer") between the application of the structural base composition and the catalyst composition during the process of the second aspect, with the subsequent heat treatment of the resulting structure leading to migration of the ruthenium oxide interlayer throughout the composite layer, resulting in an enhanced conductive pathway through the composite layer and other advantages identified above.

The structural base composition of all embodiments of the anode of the first aspect comprises metal oxide compounds of ruthenium, tin and titanium, and preferably consists essentially of metal oxide compounds of ruthenium, tin and titanium, to the desired stoichiometric ratio of Ru : Sn. The combination of these three metals is important to obtaining the correct morphology for the structural base composition *in situ* on the anode surface. Other metal oxides or other compounds may additionally present provided they do not adversely affect the base composition morphology, however most preferably the structural base composition consists of metal oxide compounds of ruthenium, tin and titanium.

In particular, the specific combination of ruthenium, tin and titanium provides a base structural composition exhibiting the desired particulate base morphology and which is consequently also resistant to significant cracking, and is preferably crack-free, providing a resilient base structure onto which the catalyst composition can by applied. In contrast, for example, a conventional coating composition based on ruthenium and tin typically illustrates a sediment-like "mud cracked" surface and does not provide the same resilient base for subsequent compositions.

Furthermore, the specific combination of ruthenium, tin and titanium in the structural base composition provides improved durability for the anode of the first aspect of the invention, when compared to analogous base compositions comprising only ruthenium and titanium, or ruthenium and tin. In this regard, the combination of both tin and titanium with ruthenium provides the anode of the invention with improved anode lifetime and improved mechanical adhesion, and further contributes to the advantages of the invention.

The ruthenium, tin and titanium oxides of the structural base composition also contribute substantially to the overall stoichiometry of these metals in the composite metallurgical layer of the anode of the first aspect, and the respective contents of ruthenium, tin and titanium within the structural base composition should therefore be adjusted in accordance with the skill in the art, in order to arrive at the required overall stoichiometry for the composite metallurgical layer.

In practice however, when adopting the process conditions of the second aspect of the invention, the application of a starting composition for the structural base having the metallic stoichiometry Ru_{≥0.3} (Sn+Ti)_{≤0.7} will arrive at a suitable overall stoichiometry for these metals within the composite metallurgical layer, and in regard to the process of the second aspect, it is important that the ruthenium is present to the stoichiometric level of at least 0.3 in the starting base composition to obtain the anode and advantages of the invention. The skilled person may, however, vary this starting base composition to obtain a particular desired overall metallic stoichiometry, taking into account for example any additional contribution of tin or ruthenium from certain embodiments of the catalyst composition.

The above-described embodiments of the first aspect of the invention may comprise, in addition to the above-described features, one or more further compositional elements for enhancing particular properties of the anode, provided the overall advantages of the invention are still obtained. For example, in the anode structure of any preceding embodiment, the base structural composition or the catalyst composition or both additionally comprise a precious catalytic metal (in addition to any palladium, if present), and preferably iridium, in the form of its oxide or other catalytically-active species, in an amount providing an overall additional precious metal content, and preferably iridium content, of at most 15 atom% of the total metal atom content of the composite metallurgical layer, and preferably at most 10 atom%, more preferably at most 7 atom%. The optional presence of this small amount of precious metal, and especially iridium, may be favoured from the viewpoint of further enhancing catalytic performance of the anode, but should be limited in accordance with the object of the invention to minimise the use of costly precious metals and rely primarily on the cobalt oxide for catalytic activity. Accordingly, such amounts of precious metals are much lower than are typically used when basing a catalyst composition on such metals.

Alternatively, or in addition, the anode composite metallurgical layer of all embodiments may further comprise at least one compound of copper in an amount providing the composite metallurgical layer with an overall copper content of at most 10 atom%, and preferably at most 2 atom% of the total metal atom content of the composite metallurgical layer;;or at least one compound of aluminium in an amount providing the layer with an overall aluminium content of at most 30 atom%, and preferably at most 20 atom% of the total metal atom content of the composite metallurgical layer; at least one compound of nickel in an amount providing the layer with an overall aluminium content of at most 15 atom%, and preferably at most 10 atom% of the total metal atom content of the composite metallurgical layer; or more than one of the above. The additional presence of copper, aluminium or nickel within the composite metallurgical layer provides a further increase in the catalyst selectivity for the chlorine evolution reaction, as measured for example by the low salt efficiency. For this reason, although the copper and/or aluminium and/or nickel may be distributed throughout the composite layer, it is preferred that the copper and/or aluminium and/or nickel is introduced via and resides within the catalyst composition, preferably in the form of one or more oxide compounds.

### Second aspect of the invention (process of preparation)

The second aspect provides a process for the preparation of a catalytic anode structure for use in an electro-chlorination system, comprising the following sequential steps:
a) the preparation or obtention of an electrically conductive solid substrate;
b) the application, to the electrolyte-facing surface of the substrate, of an electrically-conductive metallurgical composition (i) comprising compounds of ruthenium, tin and titanium in amounts providing the composition (i) with the overall metallic stoichiometry Ru_{≥0.3} (Sn+Ti)_{≤0.7}
c) the optional application, to the metallurgical layer resulting from the application of composition (i), of an electrically conductive metallurgical composition (ii) comprising one or more compounds of ruthenium; and
(d) the application, to the metallurgical layer resulting from the application of composition (i) or from the application of compositions (i) and (ii) where composition (ii) is optionally applied, of an electrically conductive metallurgical catalyst precursor composition (iii) comprising cobalt oxide crystalline particles;

wherein the process solvent used for applying the metallurgical compositions in steps (b) and (d), and optionally step (c), is a mixture of isopropanol and water in the ratio range of 80:20 to 95:5 by volume]; and
wherein the resulting structure is thereafter dried, and then heat-treated at a temperature of at least 450°C.

The process of the second aspect of the invention obtains the catalytic anode structure defined under the first aspect of the invention and is the preferred process for preparing the anode of the first aspect.

The temperature conditions and process solvent defined in the process of the second aspect are important to obtaining the desired catalytic anode structure.

In the process, the resulting structure is heat-treated at a temperature in the range of at least 450°C, and preferably heat-treated at a temperature in the range of 450 to 600°C, such as 450°C to 550°C. More preferably, the resulting structure is heat-treated at a temperature in the range of 475 to 525°C, and optimally at a temperature of 500°C.

The process of the invention also requires the use of a specified process solvent for applying the metallurgical compositions in steps (b) and (d), and optionally step (c), this process solvent being a mixture of isopropanol and water in the ratio range of 80:20 to 95:5 by volume, and preferably in the ratio range of 82.5:17.5 to 87.5:12.5 by volume. Most preferably, the process solvent is a mixture of isopropanol and water in the ratio of 85:15 by volume.

This composition of process solvent has been found to show advantages over similar alcoholic solvents for solvency of the starting compounds used in the process of the second aspect. In addition, this composition of process solvent has been found to advantageously control the surface morphology of the layer formed by the application of the metallurgical compositions, both before and after the final heat-treatment step, and in particular contributes to obtaining the aggregated particulate morphology of the structural base composition, and more preferably free of integrity-weakening cracks. This ability to control layer morphology is particularly attributed to the choice of alcohol and the ratio of alcohol to water in the process solvent, and is optimally controlled at the volume ratio of 85:15 (isopropanol:water).

Preferably, in the process of the invention, the anode substrate (a) is heated to a temperature in the range of 55-200°C during steps (b) and (d), and step (c) where present, and the resulting structure is thereafter dried at a temperature within the same range. Preferably, the heating of the anode substrate to this temperature range is conducted throughout steps (b) and (d), and step (c) where present, and the resulting structure is thereafter dried at a temperature within the same range. Optimally, the substrate (a) is heated to a temperature of 100°C throughout steps (b) and (d), and step (c) where present, and the resulting structure thereafter dried at that temperature.

During the application step (b) of the process, the use of the defined process solvent volatile under that condition, and where present the heat treatment of the substrate, enables the formation of voids in the structural base layer into which the catalyst composition (iii) subsequently applied in step (d) (and the optional composition (ii) applied in step (c)) can advantageously penetrate. During application step (d) (and, where present, optional application step (c)) the use of the defined process solvent, and where present the specified heating of the substrate, and subsequent drying and heat-treatment of the resulting structure, also contribute to the formation of the advantageous morphology and composition of the resulting composite metallurgical layer on the anode of the invention.

In particular, applying the metallurgical compositions (i) and (iii) (and where present, composition (ii)) to a substrate that is preferably heated in accordance with the second aspect of the invention has been found to enhance the formation of the desired composite metallurgical layer on the anode. The drying of the resulting structure at the same temperature range has also importantly been found to enhance the formation of the desired composite metallurgical layer, in particular by favouring the formation of the desired morphology of a continuous layer, and especially one uninterrupted by mud-cracks or other significant penetrating discontinuities.

The essential final heat-treatment of the resulting structure at a temperature of at least 450°C has importantly been found to enhance the formation of the desired composite metallurgical layer, in particular by favouring the improvement in mechanical adhesion of the composite metallurgical layer to the anode substrate, and by favouring high selectivity for the chlorine evolution reaction over the oxygen evolution reaction from water splitting. In this regard the second aspect of the invention prefers a final heat-treatment in the range of 450 to 550°C, and especially an optimal final heat-treatment at 500°C, wherein higher selectivity for the chlorine evolution reaction and mechanical adhesion is observed.

The use in the process of the second aspect of the above-defined temperature conditions and process solvent, in combination with the defined metallurgical contents of the starting compositions (i) and (iii) (and optimally (ii), where present), results in the formation on the anode substrate of a composite metallurgical layer having the desired composition and morphology, suitable for use as the anode of the first aspect.

In the process of the second aspect, composition (i) applied in step (b) comprises compounds of ruthenium, tin and titanium in amounts providing the composition (i) with the overall metallic stoichiometry Ru_{≥0.3} (Sn+Ti)_{≤0.7}. Composition (i) is the starting composition for the structural base composition of the composite metallurgical layer, and it is important in the process of the second aspect of the present invention that the ruthenium content of composition (i) is stoichiometrically at the level of 0.3 or above (corresponding to 30 atom%) relative to the tin and titanium present in the composition in order to arrive at the desired base structure. It has been found that the durability of the resulting structural base composition is much improved when the ruthenium is at or above this level in the starting composition (i), when applied according to the process of the second aspect. In addition, the ruthenium assists with the overall conductivity of the base structural composition.

In this regard, it is preferred that composition (i) applied in step (b) of the process comprises compounds of ruthenium, tin and titanium in amounts providing the composition (i) with the overall metallic stoichiometry Ru_{0.3} (Sn+Ti)_{0.7}. This level of ruthenium is considered optimal in the composition (i) of the process of the invention, giving rise to a particularly efficient and durable anode structure.

The combined presence of tin and titanium in addition to ruthenium in the composition (i) results in the formation, via its application in the process of the second aspect, of a structural base composition having the desired morphology of aggregated particles and an absence of the extensive mud-cracking behaviour seen in other compositions comprising ruthenium with only titanium or tin alone. In this respect, the minimum level of 30 atom% of ruthenium relative to tin and titanium in the starting composition (i) also leads, under the conditions of the process, to the enhanced formation of the network of aggregated particles in the morphology of the resulting structural base composition, and a lack of cracking behaviour.

The presence of tin in composition (i) in combination with ruthenium and titanium also importantly contributes to an increase in long-term durability of the anode prepared according to the second aspect, and gives rise to an increase in the mechanical adhesion of the composite metallurgical layer to the anode substrate. The tin content within composition (i) can be adjusted to provide the resulting anode with the desired overall stoichiometric ratio of Ru : Sn in the final anode structure, and desired performance in this regard.

In order to optimise these advantages, it is preferred that the tin and titanium be present in approximately equal quantities within composition (i). Most preferably therefore, composition (i) applied in step (b) comprises compounds of ruthenium, tin and titanium in amounts providing the composition (i) with the overall metallic stoichiometry Ru_{0.3}Sn_{≥0.3}Ti_{≤ 0.4}, and optimally Ru_{0.3}Sn_{0.35}Ti_{0.35}

In all the above embodiments of the second aspect, whilst minor amounts of other metallic compounds may be present in addition to the essential compounds of ruthenium, tin and titanium it is preferred that composition (i) consist essentially of compounds of ruthenium, tin and titanium, and more preferred that composition (i) consist of compounds of ruthenium, tin and titanium, preferably in amounts providing the composition (i) with the overall metallic stoichiometry Ru_{0.3} (Sn+Ti)_{0.7}, and most preferably with the overall metallic stoichiometry Ru_{0.3}Sn_{0.35}Ti_{0.35}

In the process of the second aspect, composition (iii) is applied in step (d) to the metallurgical layer resulting from the application of composition (i), or from the application of compositions (i) and (ii) where composition (ii) is optionally applied. Composition (iii) is an electrically conductive metallurgical catalyst precursor composition, comprising cobalt oxide crystalline particles of the kind hereinbefore described in relation to the first aspect.

It is preferred in this regard that the cobalt oxide crystalline particles in the catalyst precursor composition consist essentially of crystalline cobalt oxide having the chemical formula Co₃O₄. In one such embodiment, these cobalt oxide crystalline particles may consist of crystalline cobalt oxide having the chemical formula Co₃O₄. The presence of this crystalline form of cobalt oxide may be confirmed by X-ray diffraction or other conventional crystallographic techniques.

In another, more preferred embodiment, the cobalt oxide crystalline particles in the catalyst precursor composition consist essentially of crystalline cobalt oxide having the chemical formula Co₃O₄, and further consist essentially of ruthenium to the level of at most 5 atom % of ruthenium based on the total metal atom content of the crystalline particles, at least some of said ruthenium being present in the form of surface decoration on the crystalline particles. In this latter embodiment, the cobalt oxide crystalline particles in the catalyst precursor composition may further contain crystalline regions wherein, in addition to surface decoration, ruthenium is incorporated within the crystal lattice of the cobalt oxide, or has formed a mixed metal oxide with cobalt, or both.

The limited quantity of ruthenium provided for in these embodiments in association with the cobalt oxide crystalline particles in the catalyst precursor composition provides the advantage of further improving the properties of the composite metallurgical layer when applied to the anode in the process of the invention, most notably by improving the selectivity of the catalyst for the chlorine evolution reaction, and improving durability of the anode, particularly in terms of operational lifetime. The ruthenium may be present in oxide compound form or in metallic elemental form, at least in the case of incorporation within the crystal lattice of the cobalt oxide. The ruthenium associated with the cobalt oxide catalyst in these embodiments may be present in an overall non-stoichiometric proportion, approximating to a mixture of elemental and oxide-bound ruthenium.

However, exceeding the upper limit of 5 atom% for ruthenium content associated with the crystalline particles in the catalyst precursor composition has been found to result in a reduction on the efficiency of the chlorine evolution reaction, especially for water treatment applications, as evidenced by a decrease in the low salt efficiency. For this reason the ruthenium content associated with the cobalt oxide catalytic particles should be limited to the stated level, and it is not advantageous to increase ruthenium content further in any expectation of further improvement.

In all the above embodiments it is preferred that the catalyst precursor composition consists essentially of cobalt oxide crystalline particles distributed in a mixture with other metal compounds that will, upon application via the process of the second aspect, give rise a crystalline matrix of other metal oxides in the finished catalyst composition of the anode of the invention. It is especially preferred that these other metal compounds do not comprise substantial or any amounts of precious metal oxides such as palladium or iridium, other than as provided herein in relation to the present invention.

In a particularly advantageous embodiment, the process of the second aspect is conducted using as catalyst precursor a composition (iii) wherein the cobalt oxide crystalline particles (preferably as described above) are dispersed in a mixture of compounds of antimony and tin, wherein the overall molar ratio of cobalt : total antimony and tin in composition (iii) is in the range of 20:80 to 80:20. This combination of antimony and tin compounds in composition (iii) gives rise, upon application via the process of the second aspect, to a crystalline matrix of antimony and tin oxides in which the crystalline particles of cobalt oxide are aggregated, giving rise to the desired morphology of the composite metallurgical layer.

In this preferred embodiment, it has also been found that using molar ratios of cobalt: total of antimony and tin within the range specified for composition (iii) provides for increased durability of operation of the anode structure resulting from the process of the invention, as demonstrated by maintaining a lower over-potential for a longer period, when compared to ratios outside the specified ratio range. Furthermore, the efficiency of the resulting catalytic anode for the chlorine evolution reaction is improved within the specified range of ratios. In these regards, molar ratios of cobalt : total of antimony and tin from 20:80 and 80:20 are preferred, whilst the range of 60:40 to 40:60 is more preferred, and the ratio of 50:50 is most preferred and optimal, especially for obtaining a resulting anode having high CER efficiency and a longer operating lifetime at low over-potential.

In the above preferred embodiment, it has also been found that the performance of the resulting anode may be further enhanced when prepared via the process of the second aspect by employing a composition (iii) wherein the ratio of cobalt : total of antimony and tin is controlled as described above, and furthermore wherein the compounds of antimony and tin are present in amounts providing composition (iii) with an overall metallic stoichiometric ratio of antimony : tin of at most 1:10, and preferably of at most 1:20 . Additionally controlling the ratio of antimony to tin in the composition (i) in this range through the process of the invention results in an anode having further improved efficiency for the chlorine evolution reaction.

More preferably in this highly advantageous embodiment of the process, the overall metallic stoichiometric ratio of antimony : tin in composition (iii) is at most 1:50 and especially at most 1:100. The optimal overall metallic stoichiometric ratio of antimony : tin in composition (iii) for achieving increased efficiency of the chlorine evolution reaction is 1:200.

It is most preferred that the composition (iii) combines the preferred ranges of the ratio of cobalt: total of antimony and tin, and the preferred ranges of the overall metallic stoichiometric ratio of antimony : tin. Such compositions (iii) serve as particularly effective catalyst precursor compositions in the process of the second aspect of the invention, and lead to the formation of anode structures with particularly effective combinations of efficiency for the chlorine evolution reaction, and having high durability providing longer operating lifetimes at low over-potentials.

Thus, in particular, in the process of the second aspect it is preferred that the composition (iii) comprises cobalt oxide crystalline particles dispersed in a mixture of compounds of antimony and tin, wherein the overall molar ratio of cobalt : total of antimony and tin is in the range of 20:80 to 80:20, and the overall metallic stoichiometric ratio of antimony : tin is at most 1:10, and preferably at most 1:20. It is more preferred that composition (iii) comprises cobalt oxide crystalline particles dispersed in a mixture of compounds of antimony and tin, wherein the overall molar ratio of cobalt: total of antimony and tin is in the range of 40:60 to 60:40 and the overall metallic stoichiometric ratio of antimony : tin is at most 1:50, and preferably at most 1:100. It is most preferred that composition (iii) comprises cobalt oxide crystalline particles dispersed in a mixture of compounds of antimony and tin, wherein the overall molar ratio of cobalt : total of antimony and tin is 50:50 and the overall metallic stoichiometric ratio of antimony : tin is at most 1:100, and optimally is 1:200 or less, ideally in the range of 1:200 to 1:250.

These highly-preferred embodiments for composition (iii) may further comprise the preferred embodiments of the cobalt oxide crystalline particles described hereinbefore, in particular cobalt oxide crystalline particles consisting essentially of crystalline cobalt oxide having the chemical formula Co₃O₄; which crystalline particles may more preferably also consist essentially of ruthenium to the level of at most 5 atom % of ruthenium based on the total metal atom content of the crystalline particles, at least some of said ruthenium being present in the form of surface decoration on the crystalline particles. In this latter embodiment, the cobalt oxide crystalline particles in the catalyst precursor composition (iii) may further contain crystalline regions wherein, in addition to surface decoration, ruthenium is incorporated within the crystal lattice of the cobalt oxide, or has formed a mixed metal oxide with cobalt, or both.

The compositions (i), (ii) and (iii) for use in the process of the first aspect may each be prepared from compounds known in the art for the purpose of metal oxide catalyst preparation, mixed together in the appropriate ratios according to the teaching of the invention in the presence of the process solvent. Whilst such compounds may include the relevant metal oxide compounds where practical, typically other compounds are used that allow better mixing or suspension and will oxidise under the subsequent heat-treatment of the process to give rise *in situ* to the desired metal oxides.

Thus, it is preferred in the process of the second aspect that the ruthenium, tin, and titanium compounds present in composition (i), the tin and antimony compounds where present in composition (iii), and the ruthenium compounds in optional composition (ii) where present, each comprise compounds other than oxide compounds; and wherein their heated application in process steps (b) and (d), and optional step (c) where present, followed by drying and heat-treatment, thermally decomposes these compounds into one or more of their respective metal oxide or mixed metal oxide compounds within the composite metallurgical layer of the final anode structure.

In this regard, the ruthenium, tin and titanium compounds present in composition (i) preferably comprise, and more preferably consist of, their respective halide compounds, and/or complexes with acetylacetone; the tin and antimony compounds where present in composition (iii) preferably comprise, and more preferably consist of, their respective halide compounds; and the ruthenium present in composition (ii) where applied preferably comprises, and more preferably consists of, one or more of its respective halide compounds or its complex with acetylacetone. Such compounds provide for suitable dispersion of the metals in the compositions used in the process, and subsequently convert to their respective oxides under the conditions of the process of the invention to give rise to the desired anode of the first aspect of the invention.

The starting compositions for the process may additionally comprise other metal compounds bringing further advantages to the resulting anodes, as detailed under the first aspect.

Thus, the starting compositions may additionally comprise at least one compound of palladium, in an amount providing an overall palladium content of preferably at most 7 atom%, and preferably at most 5 atom% based on the total metal atom content of the starting composition. Preferably the starting composition (iii) additionally comprises at least one compound of palladium, in an amount providing an overall palladium content of preferably at most 7 atom%, and preferably at most 5 atom% based on the total metal atom content of the starting composition.

The composition (iii) may additionally comprise at least one compound of copper, or at least one compound of aluminium, or both, in amounts respectively providing composition (iii) with an overall copper content of at most 10 atom% , and preferably at most 2 atom% based on the total metal atom content of the composition, or an overall aluminium content of at most 30 atom%, and preferably at most 20 atom% based on the total metal atom content of the composition, , or an overall nickel content of at most 15 atom%, and preferably at most 10 atom% based on the total metal atom content of the composition, or more than one of the above.

At least one of the compositions (i), (ii) or (iii) may additionally comprise at least one compound of iridium, in an amount respectively providing an overall iridium content of at most 15 atom%, and preferably at most 10 atom%.

These additional metallic species may be introduced via their compounds conventionally used in the art for inclusion in metallurgical coatings.

In a further, preferred embodiment the starting composition (iii) does not comprise any compound of titanium, giving rise through the process of the second aspect to a catalyst composition that is free of titanium having the attendant advantages hereinbefore described.

In the process of the invention, the electrically conductive solid substrate consists essentially of a valve metal, preferably titanium, as detailed under the first aspect of the invention.

In the process of the invention, each metallurgical composition applied in steps (b) and (d), and optional step (c) where present, may be sequentially applied by coating techniques known in the art, such as brush, roller or drawdown application, spray coating by means such as electro-spraying or pressure spraying, dip coating and curtain coating. Thicker coatings may be applied here required, by the coating technique making multiple passes over the underlying structure.

Preferably, each metallurgical composition applied in steps (b) and (d), and optional step (c) where present, is sequentially applied by brush-coating in one or more passes over the underlying structure, or by spray-coating in one or more passes over the underlying structure. However, other conventional techniques may also be used to apply one or more of the metallurgical compositions.

### Third aspect of the invention (electro-chlorination system)

In a third aspect, the invention provides an electro-chlorination system comprising the electrolytic anode structure of the first aspect, or obtainable by the process of the second aspect as described above.

### Fourth aspect of the invention (electrolytic process)

In a fourth aspect, the invention provides an electrolytic process for the catalytic evolution of chlorine gas from an aqueous solution containing chloride ions, which comprises passing an electrical current through said solution in an electrolytic cell comprising the electrolytic anode structure of the first aspect or obtainable by the process of the second aspect, wherein chlorine gas is evolved from the aqueous solution at the anode.

In a preferred aspect of the electrolytic process aspect, the chlorine gas evolved by the process is used as a biocide to disinfect water, and more especially used to disinfect ballast water or industrial waste water, or municipal or domestic water, such as recreational water in swimming pools and domestic drinking water. In an alternative preferred aspect, the process is a chlor-alkali process for the generation and recovery of chlorine.

### Worked examples of the invention

### 1. Preparative examples

### Preparation of example starting compositions for the process of the invention

1.A Example starting compositions (i), (ii) and (iii) for use in steps (b), (c) and (d) respectively of the process were prepared from the following component compounds and liquids, obtainable in the art:
   *Crystalline solid compounds:*
      RuCl_{3.}xH₂O (available as an item of commerce, and obtained from Sigma-Aldrich),
      SnCl_{4.}5H₂O (available as an item of commerce, and obtained from Sigma-Aldrich),
      SbCl₃ (available as an item of commerce, and obtained from Sigma-Aldrich),
      PdCl₂ (available as an item of commerce, and obtained from Alfa Aesar),
      Ru(acac)₃ (available as an item of commerce, and obtained from Sigma-Aldrich; wherein "acac" represents acetylacetone), and
      Crystalline cobalt oxide particles having the chemical formula Co₃O₄ were synthesised according to the procedure outlined in Section 1.D below.
   *Liquids:*
      2-propanol (also termed isopropanol, available as an item of commerce, and obtained from Alfa Aesar),
      De-ionized water,
      TiCl₃ solution (TiCl₃ available as an item of commerce, and obtained from Sigma-Aldrich Sigma-Aldrich, dissolved into a 12% solution in aqueous hydrochloric acid).
1.B Preparation of starting composition (i) of the process

A preferred composition (i) consisting essentially of ruthenium, tin and titanium compounds having the overall metallic stoichiometry Ru_{0.3}Sn_{0.35}Ti_{0.35} for use in the process to form the structural base composition of the composite metallurgical layer was prepared according to the following sequence.

To a 70 mL vial was added RuCl_{3.}xH₂O (207.6 mg; 1mmol) and SnCl_{4.}5H₂O (409.4 mg; 1.17mmol). These solid materials were dissolved into the 2-propanol (17 ml) by vortexing, until no metal precursors settle out upon standing. To the resulting solution was added 1.5 mL of the TiCl₃ solution (12 % TiCl₃ in hydrochloric acid solution, 1.17mmol) by dropwise addition with mechanical stirring at 1,000 rpm. In addition, 1.5 ml of de-ionized water was added dropwise into the solution. The resulting solution was aged for 5 hours with mechanical stirring at 1,000 rpm under ambient conditions, to produce composition (i) for use in the process of the invention.

### 1.C Preparation of starting composition (ii) of the process

A preferred composition (ii) consisting essentially of ruthenium dioxide for use in the process to form the optional interlayer was prepared according to the following sequence.

The solvent was prepared by mixing 2-propanol (38.7 ml) and de-ionized water (7.8 ml). Then 15.5 ml of the prepared solvent was placed in a 70ml vial, and thereto added 115.8mg (0.29mmol) of Ru(acac)₃ and an additional 2 mL of IPA. The as-prepared solution was then sonicated for 20 minutes, to produce composition (ii) for use in the process of the invention.

### 1.D Preparation of starting composition (iii) of the process

A preferred catalyst precursor composition (iii) consisting essentially of crystalline particles of cobalt oxide, for use in the process as the composition to form the catalyst composition of the composite metallurgical layer, was prepared according to the following sequence.

### a) Synthesis of Co₃O₄ crystalline particles

Co(NO₃)₂ 6H₂O (170 g, 0.584 mols) was dissolved in ethanol (99.9%, 510 ml) in a beaker at room temperature. To this mixture was added 1-heptanol (510 ml) and the mixture was stirred for 5 minutes. The mixture was transferred to a pressure reactor and heated at 160 °C for 7 hours. The resulting mixture was left for 16 hrs to cool to room temperature and for the solid product to settle. The resulting supernatant was decanted, and the resulting solid product washed with isopropyl alcohol (100 ml) three times. Between each washing the product was thoroughly mixed then centrifuged for 1 hour at 8500 rpm. The supernatant was decanted and removed in each case. Isopropyl alcohol (IPA) was added to meet the solids content of 12 wt% (IPA addition was calculated by the resulting density of the solution once mixed). The resulting mixture was dispersed at 2000 rpm utilising a ball mill with 0.5mm ZrO₂ beads for 2 hours at room temperature to yield the 12wt% Co₃O₄ nanoparticle solution.

The above-synthesised Co₃O₄ crystalline particles were sized by direct measurement of diameters in transmission electron micrograph images, and found to range in diameter from 3nm to 7nm, with a median diameter of 5nm.

### b) Preparation of composition (iii)

The solvent was prepared by mixing 2-propanol (38.7 ml) and de-ionized water (7.8 ml). SbCl₃ (44.7 mg; 0.20 mmol) was dissolved in this solvent by vortexing. 5 ml of this as-prepared solution was then diluted with a further 45 ml of the solvent mixture to form a first "antimony solution". Then 15.5 ml of this antimony solution was mixed with SnCl_{4.}5H₂O (457.8 mg; 1.31 mmol) with vortexing, to form an "antimony-tin solution".

PdCl₂ (4.8 mg; 0.027 mmol) was placed into a 70 ml vial, and the prepared antimony-tin solution then poured into the vial. Additionally, add 1 ml of the Co₃O₄ crystalline particles solution (0.438 mmol) prepared in a) above, and 1 ml of 2-propanol, were each added into the solution. Finally, the mixture was sonicated for 20 minutes, to produce composition (iii) for use in the process of the invention, comprising Co₃O₄ crystalline particles incorporating palladium to the level of 1atom% in a solution of antimony and tin compounds wherein the molar ratio of antimony: tin was 1 : 247 and the overall metallic stoichiometric ratio of cobalt : total of antimony and tin was 50:50.

### Preparation of catalytic anode of the invention, via the process of the invention

An anode according to the first aspect of the invention was prepared according to the process of the second aspect of the invention, as follows.

A titanium mesh was sourced as the anode substrate and, after cleaning, heated to the temperature of 100°C using a heating plate. Whilst at this temperature, the above-prepared composition (i) was applied to the hot substrate surface by brush-coating. The resulting coated sample was held at 100°C for 1 minute the substrate with turned over and the reverse side coated again the substrate was held at 100°C for 1 minute. The coated sample was then transferred to a 500°C oven for 5 minutes. The coated sample was then transferred back to the to the hotplate at 100°C and the coating and heat treatment steps repeated. This brush-coating of the substrate surface with composition (i) was repeated four additional times, resulting in a total of five brush passes over the surface being coated.

The resulting structure was then further brush-coated with above-prepared composition (ii) in the same manner as described above, a total of five brush passes being made over the surface. The resulting structure was thereafter further brush-coated with above-prepared composition (iii), a total of 10 brush passes being made over the surface with this catalyst precursor composition. After these coating steps, the resulting coated structure was dried at the same temperature.

The dried resulting structure was thereafter finally heat-treated in an oven for 1 hour at 500°C, followed by slow cooling within the oven over a period of 8 hours, to obtain the anode structure of the invention.

Three further examples were prepared according to the above general procedure, however, in order to isolate the metallic composition of the resulting composite metallurgical layer, a substrate of glass was used in place of the titanium substrate of the above example, and the compositions (i), (ii) and (iii) were applied by spray-coating. In the case of Example 1 below, three spray passes were used for applying each of the compositions (i), (ii) and (iii), with composition (i) sprayed at the rate of 300 µL/min and compositions (ii) and (iii) sprayed at the rate of 600 µL/min. In the case of Example 2 below, three spray passes were again used for applying each of the compositions (i) and (ii), with six spray passes being used to apply composition (iii), with compositions (i) and (ii) sprayed at the rate of 300 µL/min and composition (ii) sprayed at the rate of 600 µL/min. In the case of Example 3 below, three spray passes were again used for applying each of the compositions (i), (ii) and (iii), with compositions (i) and (ii) sprayed at the rate of 600 µL/min and composition (iii) sprayed at the rate of 300 µL/min. The resulting composite metallurgical layers were then each analysed multiple times using the ICP-MS technique and the following metal compositional information obtained, in atom% of the total metal atom content:

| **Example 1** | **Ti** | **Ru** | **Sn** | **Co** | **Sb** | **Pd** |
|---|---|---|---|---|---|---|
| 1st | 6.48 | 1.04 | 20.56 | 70.59 | 0.25 | 1.07 |
| 2nd | 5.83 | 1.40 | 17.12 | 74.15 | 0.23 | 1.26 |
| 3rd | 5.54 | 1.33 | 16.52 | 75.12 | 0.23 | 1.27 |
| **Average** | **5.95** | **1.26** | **18.07** | **73.29** | **0.24** | **1.20** |
| ST DEV | 0.34 | 0.14 | 1.54 | 1.69 | 0.01 | 0.08 |

| **Example 2** | **Ti** | **Ru** | **Sn** | **Co** | **Sb** | **Pd** |
|---|---|---|---|---|---|---|
| 1st | 5.35 | 1.79 | 19.35 | 72.53 | 0.23 | 0.75 |
| 2^{nd} | 6.05 | 1.88 | 19.18 | 71.82 | 0.24 | 0.83 |
| 3^{rd} | 7.65 | 3.36 | 21.96 | 65.90 | 0.24 | 0.90 |
| **Average** | **6.35** | **2.34** | **20.16** | **70.08** | **0.24** | **0.83** |
| ST DEV | 0.84 | 0.62 | 1.10 | 2.58 | 0.00 | 0.05 |

| **Example 3** | **Ti** | **Ru** | **Sn** | **Co** | **Sb** | **Pd** |
|---|---|---|---|---|---|---|
| 1st | 13.44 | 2.85 | 14.58 | 67.80 | 0.42 | 0.91 |
| 2nd | 16.36 | 2.03 | 16.80 | 63.16 | 0.59 | 1.07 |
| **Average** | **14.90** | **2.44** | **15.69** | **65.48** | **0.50** | **0.99** |
| ST DEV | 2.06 | 0.58 | 1.57 | 3.28 | 0.12 | 0.11 |

In each case, the resulting composite metallurgical layer comprised cobalt as the predominant metallic constituent, making up an average of at least 65 atom% of the total metal atom content of the composite metallurgical layer. The average overall metallic stoichiometric ratio of cobalt to total tin and antimony in each case provided a value within the most preferred range of 3:1 to 5:1, and the overall metallic stoichiometric ratio of antimony : tin in each case was also within the range of preferred ratios for this feature, the samples giving values at 1:75, 1:84 and 1:31 respectively. The overall stoichiometric ratio of ruthenium : tin in the composite metallurgical layer was, in each case, also within the most preferred range for this feature of 1 : ≥5, being respectively 1:8, 1:15 and 1:6.

Figure 4 provides a typical concentration-depth profile for the metal distributions through the thickness of the *in situ* composite metallurgical layer prepared according to the above process, illustrating the preferred non-uniform distribution of the cobalt oxide through the thickness of the composite metallurgical layer, being higher adjacent to the outer surface.

### 2. Performance examples

The performance and advantages of the anode of the invention were demonstrated using the following experimental techniques.

### Chlorine Evolution Reaction (CER) Efficiency Test:

The Faradic Efficiency of the electrolytic cell provides an important measure of the efficiency of the catalysed anode for the CER reaction.

An electrolytic cell was set up in which a counter-electrode (cathode) and working electrode (anode according to the invention) were deployed as follows.

A 5 × 15 cm² Ti mesh counter electrode was etched with 2.0 M sulfuric acid at 60 °C for 1 hour until the etching solution turned pale purple. The etched Ti mesh was then sonicated several times with 95 % purity ethanol for 10 min. The rinsed Ti mesh was dried by blowing nitrogen gas. The dried counter electrode was then masked with silicon tape and electroplating tape to leave 5 × 5 cm² area.

An anode prepared according to the invention was also masked with silicon tape and electroplating tape to leave 1 × 5 cm² area. Masking the electrodes helped to concentrate the current into confined areas of the electrodes exposed to the electrolyte and hence to increase current density and accelerate the test.

The electrolytic cell was assembled by attaching the masked counter electrode to one side of the electrode frame, and attaching the working electrode to the opposite side of the frame. At the bottom end of both electrodes, part of the frame kept the gap between the electrodes at 5 mm.

The above test cell was configured and operated under the following condition:
a) 500 ml of 20 mM NaCl solution was poured into a 500 ml volume beaker. The above-assembled electrode cell was placed within the beaker and two electric wires connected to the working electrode and the counter electrode respectively.
b) The solution was stirred at 300 rpm using a magnetic stirring bar. An attached potentiostat was then operated in the chrono-potentiometry mode at 40 mA/cm² for 1 minute under the 300 rpm stirring condition.
c) After the 1 minute of operation, the active chlorine concentration was measured and compared to the theoretical concentration resulting from the initial chloride ion concentration to determine the Faradic Efficiency (FE) of the cell incorporating the working electrode (anode of the invention).

The active chlorine concentration was measured by one of two interchangeable methods, described below:

### Active chlorine concentration measurement by DPD colorimetry

In this method, the DPD vial was washed with DI water until an initial test confirmed that no residual active chlorine exists in the test vial.

After the 1 minute of operation of the electrolytic cell, the solution was stirred at 600 rpm for 1 minute to make a fully homogeneous test solution. Then 1 ml of this well-mixed solution wass diluted to one tenth with 20 mM NaCl solution within the DPD vial to give a test solution volume of 10 ml).The DPD reagent was then added to the DPD vial and the vial vortexed for 10 seconds. The active chlorine concentration was then measured with the DPD pocket colorimeter, and the Faradic efficiency (FE) calculated by dividing the amount of genereted active chlorine by the theoretically produced amount of active chlorine.

### Active chlorine concentration measurement by iodometric titration

After the 1 minute of operation of the electrolytic cell, the solution was stirred at 300 rpm to make a homogeneous solution. Then 1.6 g KI (potassium iodide) was added to the beaker containing the solution. After the addition of KI, the solution turned pale yellow. Upon the addition of 4 ml of glacial acetic acid to the solution, the solution turned pale orange. After the addition of 4 ml of starch solution into the beaker, the solution turned dark blue. The dark blue solution was then titrated with 0.02 N sodium thiosulfate until the solution turned colorless, and the amount of generated active chlorine estimated from the titrated amount of added sodium thiosulfate. The Faradic Efficiency was again calculated by dividing the amount of generated active chlorine by the theoretically produced amount of active chlorine.

### Chlorine Evolution Reaction (CER) Lifetime Test:

The Faradic Efficiency of the electrolytic cell measured regularly over long-term testing provides an important demonstration of the lifetime of the catalysed anode, and hence the durability of the anode for the CER reaction. A rapid increase in FE signals deterioration of the anode and indicates it is reaching the end if its durability for CER.

An electrolytic cell with counter and working electrodes was configured as described above. The working electrode (anode) was masked to 1 cm² to concentrate the current density for test acceleration purposes. The masking was done by applying silicon tape, overlaid by electroplating tape. The top of the working electrode was also ground back to the metal substrate before being connected.
a) 1 litre of 0.6 M NaCl solution was poured into a beaker surrounded by a cooling jacket, which maintained the test solution at 15°C. After allowing 1 hour for the temperature to stabilize, the above-assembled electrode cell was placed within the beaker, and two electric wires connected to the working electrode and the counter electrode respectively.
b) The solution was stirred at 300 rpm using a magnetic stirring bar. An attached potentiostat was then operated in the chrono-potentiometry mode at 500 mA/cm² under the 300 rpm stirring condition until an increase beyond 12V was recorded, which point was taken as the duration result for the experiment.
c) During operation, the potential of the cell was repeatedly measured and plotted over time, to report the potential for CER over the duration of the lifetime test, and identify the deterioration point at which the potential rapidly increased and the useful life of the anode was exceeded (deemed when a voltage over 12V was recorded).

### Mechanical adhesion test

The mechanical adhesion of the metallurgical surface layer of the anode was assessed by the following method. A piece of 3M electroplating tape was placed over a portion of the working electrode (anode under test) left unmasked by the preparation as detailed above. The tape was eased into tight contact with the coated electrode surface using gentle pressure with a pipette tip. The tape was thereafter peeled off, and the degree to which a residue of the metallurgical coating remained on the adhesive surface of the peeled-away tape was visually assessed as a measure of the strength of the coating's adhesion to the electrode substrate, with greater residue on the removed tape indicating lower residual adhesion to the substrate.

### Acid stability test

A solution of 5% by weight hydrochloric acid was prepared by diluting concentrated hydrochloric acid to the requisite amount with de-ionised water. The anode under test was cut to a size of 2 cm × 1 cm and placed in a 10 ml vial, to which was added 5 ml of the 5% hydrochloric acid solution, with the anode sample fully submerged. The sample and colour of the acid solution was observed over time.

### 2.1 Benefit of the structural base composition of the invention

The structural base composition of the anode of the invention originates, in the accompanying process of the second aspect of the invention, from a composition (i) comprising compounds of ruthenium, tin and titanium in amounts providing the composition (i) with the overall metallic stoichiometry Ru_{≥0.3} (Sn+Ti)_{≤0.7}. The importance of these defined features in the process of the invention was demonstrated as follows.

### 2.1(a) Essentiality of the ruthenium molar metallic stoichiometry of 0.3 or above:

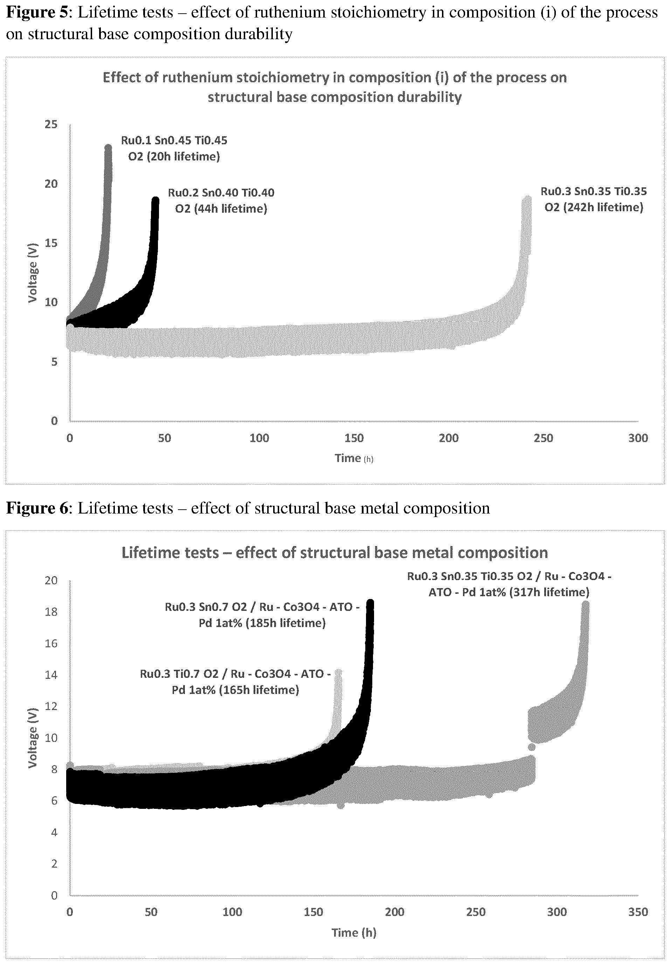

Figure 5 reports the results of CER lifetime tests conducted according to the test methodology described above. In each case, the working electrode (anode under test) was prepared analogously to the preparative method set out in section 1 of the examples, but only the base composition (i) was applied to the substrate, with compositions (ii) and (iii) being omitted. Three comparative examples of this type were prepared by varying the amount of ruthenium added to the composition (i), and maintaining the tin and titanium components at a 1:1 stoichiometric ratio as the balance of each composition.

As shown in Figure 5, the CER lifetime results show the maintenance of a low over-potential for an extended period was not achieved where ruthenium was present to the stoichiometric level below 0.3. To avoid the structural base composition weakening the underlying efficiency and durability of the catalysed anode towards the CER reaction, the specified stoichiometry is therefore required in which the ruthenium is present in at least the stoichiometric level of 0.3 in the composition (i).

This ruthenium stoichiometry also ensures the obtention of the desired morphology for the structural base composition, as a layer of aggregated particles interspersed with voids, to which the catalyst composition can then advantageously be applied. A ruthenium stoichiometry of 0.3 in composition (i) ensured the resulting structure showed a defined crystalline structure by XPS and defined, connected particles when imaged using SEM.

### 2.1(b) Essentiality of the ruthenium/tin/titanium ternary structural base composition:

Figure 6 reports the results of CER lifetime tests conducted according to the test methodology described above.

In each case, the working electrode (anode under test) was prepared using the preparative method analogous to that set out in section 1 of the examples, applying a base composition (i) and catalyst precursor composition (iii) to the substrate, with optional composition (ii) being omitted. Each example was prepared using the same catalyst precursor composition (i) of the preferred type prepared in section 1 of the examples, consisting of crystalline Co₃O₄ in a mixture of antimony and tin compounds further incorporating 5 atom% ruthenium and 1 atom% palladium.

However, the underlying structural base composition in these tests was varied. One example (of the invention) was prepared using a composition (i) of the type also exemplified in section 1 above, this composition having the overall metallic stoichiometry Ru_{0.3}Sn_{0.35}Ti_{0.35}. Two comparative examples were prepared by varying the composition (i) to exclude either the titanium or the tin compound, and maintaining the ruthenium at the overall metallic stoichiometric ratio of 0.3. Thus, the series of tests compared, at equal ruthenium content, the effect of combining ruthenium with tin and/or titanium.

As shown in Figure 6, the CER lifetime results show that the ternary combination of ruthenium, tin and titanium resulted in the maintenance of a low over-potential over a much longer period, in the presence of the same catalyst composition of the invention. Comparative examples lacking either the tin or the titanium resulted in shorter lifetimes and did not provide the same advantageous performance.

Mechanical adhesion tests were also conducted, comparing anodes made from a ternary metal composition (i) according to the invention and a comparative example wherein a binary metal composition (i) contained only ruthenium and tin. Superior mechanical adhesion of the metallurgical coating to the substrate surface was observed for the invention, as evidenced by a lower degree of coating residue visible on the removed adhesive tape.

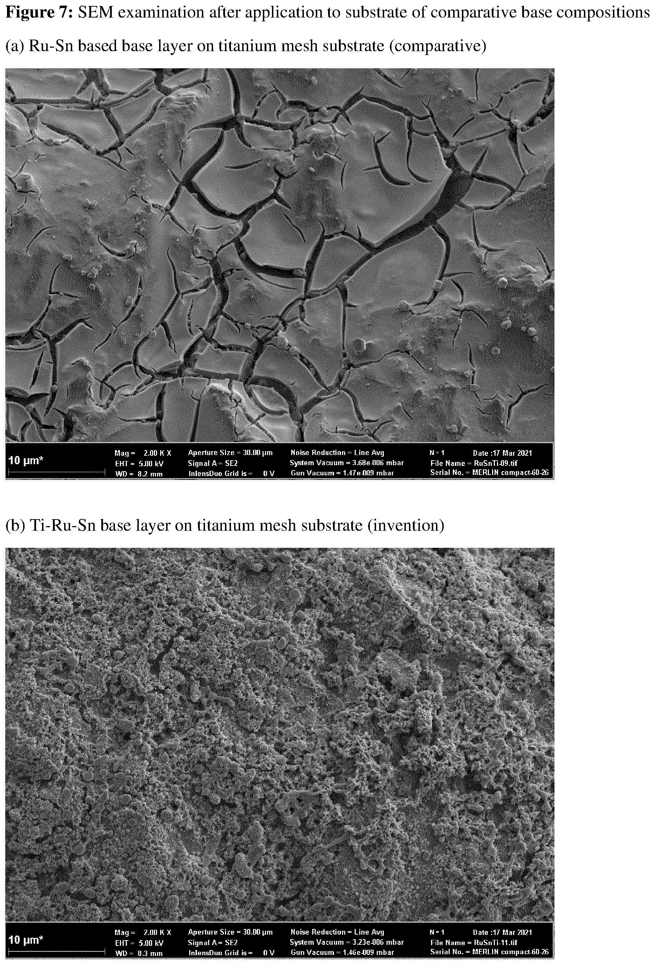

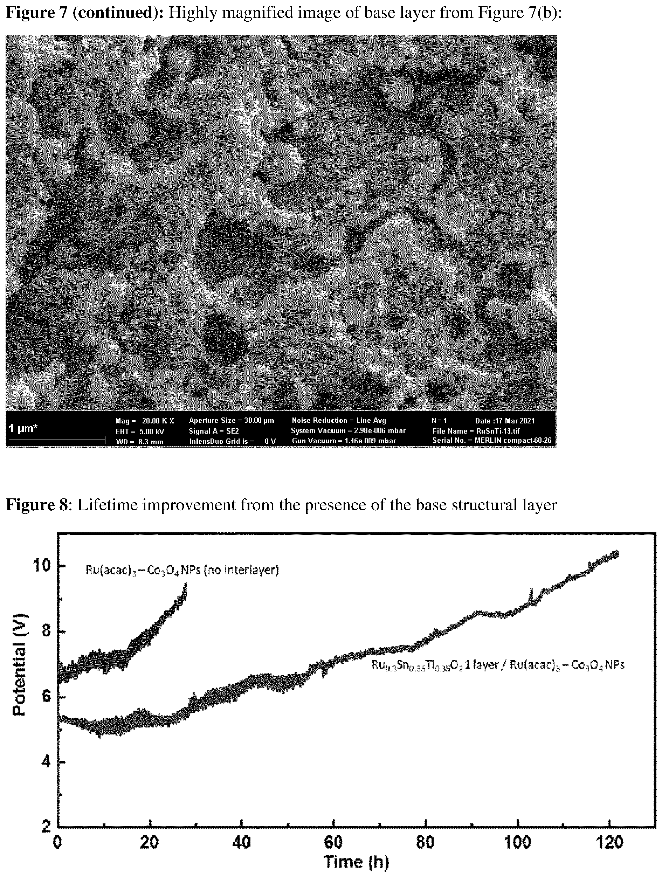

SEM examination after application of the base coatings as illustrated in Figure 7 also revealed, in the case of the ruthenium / tin comparative base composition, extensive mud-cracking on the sediment-like outer surface of the base coating. In contrast, the base coating made from the ternary base composition of the invention showed a coating of aggregated particles interspersed with voids.

In Figure 8, the lifetime advantage from the presence of the structural base layer of the invention is illustrated for an electrode on which a catalyst layer was formed from Co₃O₄ crystalline nanoparticles ("NPs") doped with a ruthenium compound. The cell potential over the lifetime of the electrode began at a lower level, and showed a significantly lower rate of increase (indicating growing over-potential) when the structural base layer was also present as an interlayer between the electrode substrate and the catalyst composition.

### 2.2 Additional advantage of the optional composition (ii) of the invention

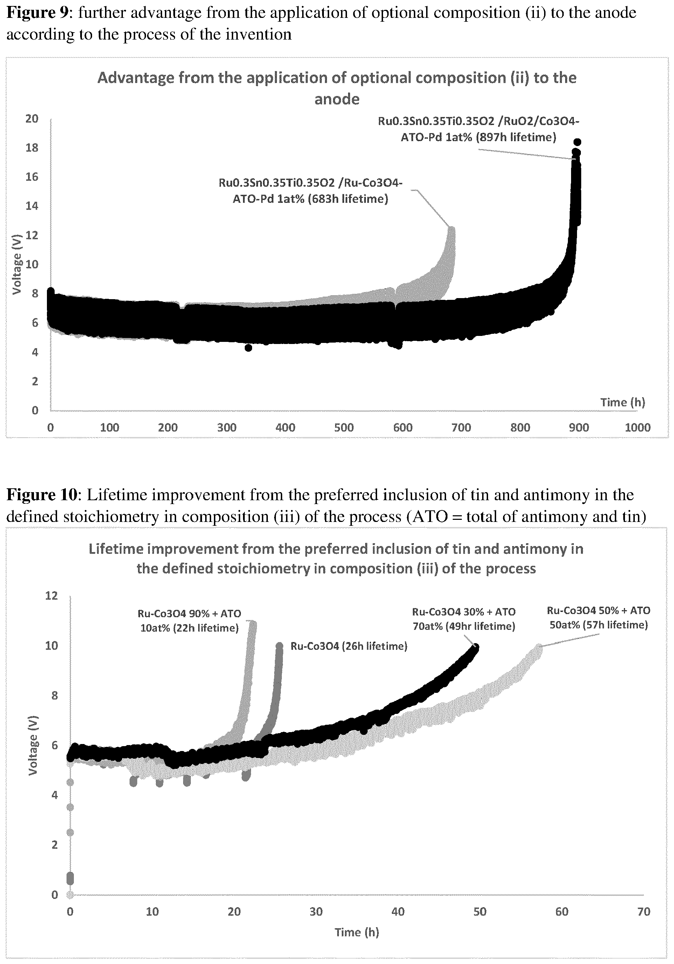

The optional interlayer provided for by the application of composition (ii) in the preferred process aspect of the invention provides a further improvement in finished anode properties. Figure 9 shows the comparison in lifetimes between two anodes of the invention. Both anodes shared the same, preferred structural base composition, but one incorporated ruthenium into the catalyst composition in accordance with the worked example in section 1 above, whereas the other instead incorporated ruthenium in the optional interlayer composition (ii) as RuO₂. The latter anode shows improved lifetime in terms of the maintenance of a lower potential for a longer period.

### 2.3 Benefit of the catalyst composition of the invention

The importance of catalyst composition on performance is illustrated below.

### 2.3(a) Inclusion of the preferred tin and antimony oxide matrix in the catalyst composition

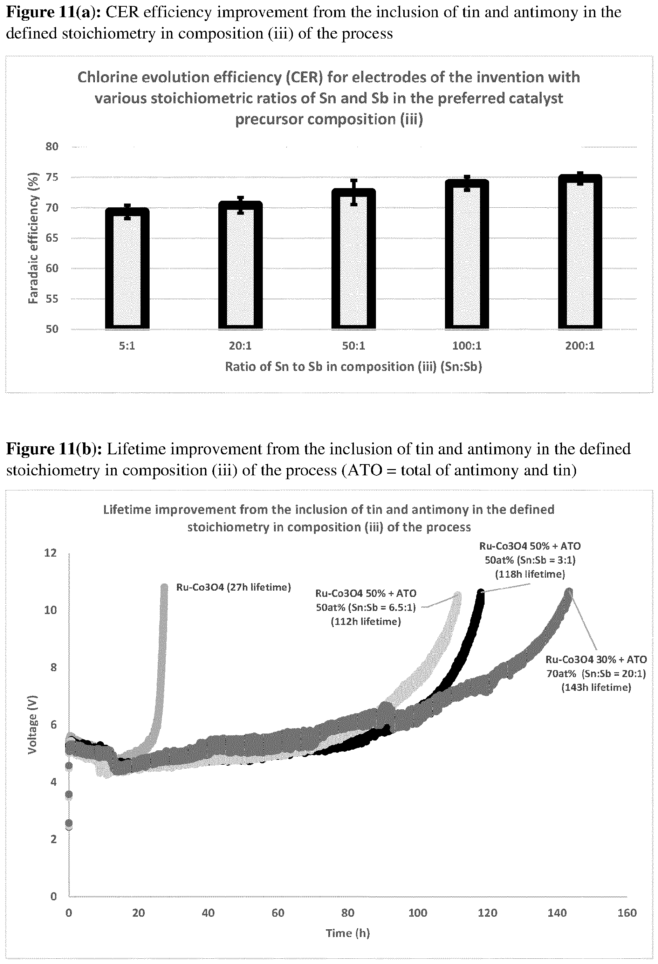

The advantageous presence of tin and antimony in the specified stoichiometric ratios is illustrated in Figures 10 and 11. Again, analogous anodes were prepared according to the example in section 1 above, but using catalyst compositions varying in their tin and antimony contents as indicated in the figure. In each case, lifetime or CER efficiency testing was conducted and the (over)-potentials compared over time.

As Figure 10 demonstrates, the overall metallic stoichiometric ratio of cobalt : total of antimony and tin in composition (iii), is influential on the lifetime of the anode; and anode structures made from a catalyst precursor composition wherein this ratio is in the range of 20:80 to 80:20, and is preferably 50:50 show improved durability in terms of maintaining low potentials for longer operating lives. The molar ratio of 50:50 provided best.

As Figure 11(a) demonstrates, in electrodes of the invention resulting from a structural base composition (i) consisting of ruthenium, tin and titanium compounds having the overall metallic stoichiometry Ru_{0.3}Sn_{0.35}Ti_{0.35} and various catalyst precursor compositions (iii) comprising Co₃O₄ crystalline particles in a varying solution of antimony and tin compounds, the electrodes resulting from examples wherein the compounds of antimony and tin are present in amounts providing composition (iii) with an overall metallic stoichiometric ratio of antimony : tin of at most 1:20 show most advantage for the CER efficiency as measured by the Faradic Efficiency (FE) using the method detailed earlier in this specification, with a growing advantage for the ratios 1:20, 1:50, 1:100 and 1:200, with the latter being the most highly effective composition (iii), resulting in an anode having the highest efficiency.

As Figure 11(b) demonstrates, the lifetime of an electrode wherein the compounds of antimony and tin were present in amounts providing composition (iii) with an overall metallic stoichiometric ratio of antimony : tin of at most 1:20 showed an improvement compared with examples wherein the ratio of antimony : tin was 1:3 or 1:6.5.

### 2.3(b) Inclusion of palladium oxide in the catalyst composition

In a further experiment, anodes were coated directly with a catalyst composition (iii) containing cobalt oxide particles, ruthenium oxide and tin and antimony oxides according to the invention, and the effect of introducing palladium as a further constituent evaluated. The results are shown in the table below, which demonstrates the improvement in efficiency from the preferred inclusion of a small amount of palladium into the catalyst composition.

| Electrode type | Atomic ratio of metal elements (catalyst layer) (atom%) | Low Salt efficiency (%) |
|---|---|---|
| Ru-Co₃O₄-ATO | Co: 69.2, Ru 7.7, Sn 23.0, Sb: 0.1 | 76.9 ± 0.6 |
| 10 layer coating | | |
| Ru-Co₃O₄-ATO + Pd 1at% | Co: 68.8, Ru: 7.6, Sn: 22.8, Sb: 0.1, Pd: 0.7 | 83.7 ± 1.0 |
| 10 layer coating | | |
| 2.3(c) Inclusion of iridium in the catalyst composition | | |

Further electrodes were prepared generally according to the preparative method set out in section 1, but employing a different stoichiometric ratio of cobalt : total of antimony and tin and excluding palladium from the catalyst precursor composition (iii), with iridium being introduced in its place, to illustrate the advantage stemming from inclusion of this other metal. These examples are set out in the table below.

In each case, Faradic efficiency was measured in 20mM NaCl solution according to the above-described method. The results illustrate the further efficiency advantage to be gained by inclusion of small levels of iridium into the electrodes of the invention.

| **Type of electrode** | **Atom% for metal elements (catalyst precursor composition (i))** | **FE in 20 mM NaCl(%)** |
|---|---|---|
| Example of the invention | Co: 69.2 at%, Ru: 7.7 at%, Sn: 23.0 at%, Sb: 0.1 at% | **74.5** ± 0.7 |
| Above example + **Ir ~1 at%** | Co: 68.7 at%, Ru: 7.6 at%, Sn: 22.8 at%, Sb: 0.1 at%, **Ir: 0.7 at%** | **75.6** ± 0.7 |
| Above example + **Ir ~5 at%** | Co: 66.8 at%, Ru: 7.4 at%, Sn: 22.2 at%, Sb: 0.1 at%, **Ir: 3.5 at%** | **79.0** ± 1.3 |
| Above example + **Ir ~10 at%** | Co: 64.3 at%, Ru: 7.1 at%, Sn: 21.4 at%, Sb: 0.1 at%, **Ir: 7.1 at%** | **83.2** ± 1.7 |

The above examples illustrate the high performance of specific embodiments of the invention.

## Claims

1. A catalytic anode structure for use in an electro-chlorination system comprising an electrically conductive solid substrate overlaid, on its electrolyte-facing surface, with an electrically conductive composite metallurgical layer, this layer comprising:
a structural base composition coating the substrate surface, the structural base composition having the morphology of aggregated particles interspersed with voids, and comprising metal oxide compounds of ruthenium, tin and titanium; and
a catalyst composition comprising cobalt oxide crystalline particles distributed on the upper surface of, and within the voids of, the structural base composition; and
wherein the cobalt is present in an amount of at least 12.5 atom% of the total metal atom content of the composite metallurgical layer; and the ruthenium and tin are present in amounts providing the composite metallurgical layer with the overall metallic stoichiometric ratio for Ru : Sn of 1 : ≥1, based on the total content of ruthenium and tin in the composite metallurgical layer; and
wherein the outer surface of the composite metallurgical layer has the morphology of a continuous coating of aggregated particles.

2. The anode structure of claim 1, wherein the wherein the cobalt is present in an amount of at least 40 atom% of the total metal atom content of the composite metallurgical layer; and the ruthenium and tin are present in amounts providing the composite metallurgical layer with the overall metallic stoichiometric ratio for Ru _{:} Sn of 1 : ≥5, based on the total content of ruthenium and tin in the composite metallurgical layer.

3. The anode structure of claim 1 or claim 2, wherein the cobalt oxide crystalline particles in the catalyst composition consist essentially of crystalline cobalt oxide having the chemical formula Co₃O₄.

4. The anode structure of any of claims 1 to 3, wherein the catalyst composition further comprises one or more noble metals or compound(s) thereof, preferably ruthenium or an oxide thereof.

5. The anode structure of claim 4, wherein the cobalt oxide crystalline particles in the catalyst composition consist essentially of crystalline cobalt oxide having the chemical formula Co₃O₄ and further consist essentially of ruthenium or an oxide thereof to the level of at most 5 atom% of ruthenium based on the total metal atom content of the crystalline particles, at least some of said ruthenium being present in the form of surface decoration on the crystalline particles.

6. The anode structure of claim 5, wherein the cobalt oxide crystalline particles in the catalyst composition further contain crystalline regions wherein ruthenium is incorporated within the crystal lattice of the cobalt oxide, or has formed a mixed metal oxide with cobalt, or both.

7. The anode structure of any of claims 1 to 6, wherein the catalyst composition comprises cobalt oxide crystalline particles within a crystalline matrix of oxides of antimony and tin; the catalyst composition being present on the upper surface of, and within the voids of, the structural base composition.

8. The anode structure of claim 7 wherein the overall metallic stoichiometric ratio of cobalt : total of antimony and tin in the composite metallurgical layer is in the range 2:1 to 9:1.

9. The anode structure of claim 7 or 8 wherein the compounds of antimony and tin are present in amounts providing the composite metallurgical layer with an overall metallic stoichiometric ratio of antimony : tin in the range of 1:5 to 1:200, and preferably in the range of 1:5 to 1:100.

10. The anode structure of any of claims 4 to 9 wherein the composite metallurgical layer further comprises at least one compound of palladium in an amount providing the composite metallurgical layer with an overall palladium content of at most 7 atom% of the total metal atom content of the composite metallurgical layer, and preferably at most 3 atom%.

11. The anode structure of any of claims 1 to 10, wherein the electrically conductive solid substrate consists essentially of a valve metal, preferably titanium.

12. The anode structure of any preceding claim, wherein the cobalt of the catalyst composition is distributed non-uniformly through the thickness of the composite metallurgical layer, the concentration of cobalt oxide being higher in the composite metallurgical layer adjacent to its outer surface than adjacent to the substrate surface.

13. The anode structure of any of claims 1 to 12 wherein the composite metallurgical layer comprises ruthenium oxide distributed throughout, or substantially throughout, both the base structural composition and the catalyst composition.

14. The anode structure of any of claims 1 to 13 wherein the structural base composition consists of metal oxide compounds of ruthenium, tin and titanium.

15. The anode structure of any of claims 1 to 14 wherein the base structural composition or the catalyst composition or both additionally comprise iridium, in the form of its oxide or other catalytically active species, in an amount providing an overall iridium content of at most 15 atom% of the total metal atom content of the composite metallurgical layer, and preferably at most 5 atom%.

16. The anode structure of any of claims 1 to 15 wherein the composite metallurgical layer further comprises at least one compound of copper in an amount providing the composite metallurgical layer with an overall copper content of at most 10 atom% of the total metal atom content of the composite metallurgical layer, and preferably at most 2atom%; or at least one compound of aluminium in an amount providing the layer with an overall aluminium content of at most 30 atom% of the total metal atom content of the composite metallurgical layer, and preferably at most 20 atom%; or at least one compound of nickel in an amount providing the layer with an overall nickel content of at most 15 atom% of the total metal atom content of the composite metallurgical layer, and preferably at most 10 atom%, or more than one of the above.

17. The anode structure of any of claims 1 to 16, wherein the outer surface of the composite metallurgical layer has the morphology of a continuous, uncracked coating of aggregated particles.

18. The anode structure of any of claims 1 to 17, wherein the catalyst composition of the composite metallurgical layer does not comprise titanium or a compound thereof.

19. A process for the preparation of a catalytic anode structure for use in an electro-chlorination system, comprising the following sequential steps:
a) the preparation or obtention of an electrically conductive solid substrate;
b) the application, to the electrolyte-facing surface of the substrate, of an electrically conductive metallurgical composition (i) comprising compounds of ruthenium, tin and titanium in amounts providing the composition (i) with the overall metallic stoichiometry Ru_{≥0.3} (Sn+Ti)_{≤0.7};
c) the optional application, to the metallurgical layer resulting from the application of composition (i), of an electrically conductive metallurgical composition (ii) comprising one or more compounds of ruthenium; and
(d) the application, to the metallurgical layer resulting from the application of composition (i) or from the application of compositions (i) and (ii) where composition (ii) is optionally applied, of an electrically conductive metallurgical catalyst precursor composition (iii) comprising cobalt oxide crystalline particles;
wherein the process solvent used for applying the metallurgical compositions in steps (b) and (d), and optionally step (c), is a mixture of isopropanol and water in the ratio range of 80:20 to 95:5 by volume; and
wherein the resulting structure is thereafter dried, and then heat-treated at a temperature of at least 450°C.

20. The process of claim 19, wherein the substrate (a) is heated to a temperature in the range of 50-200°C during steps (b) and (d), and step (c) where present, and the resulting structure thereafter dried at a temperature within the same range.

21. The process of claim 20 wherein the substrate (a) is heated to a temperature of 100°C throughout steps (b) and (d), and step (c) where present, and the resulting structure thereafter dried at that temperature.

22. The process of any of claims 19 to 21 wherein, after drying, the heat-treatment temperature is in the range of 450 to 550°C.

23. The process of any of claims 19 to 21, wherein the heat-treatment temperature is 500°C.

24. The process of any of claims 18 to 23, wherein the process solvent used for applying the metallurgical compositions in steps (b) and (d), and optionally step (c), is a mixture of isopropanol and water in the ratio range of 85:15 by volume.

25. The process of any of claims 19 to 24, wherein each metallurgical composition applied in steps (b) and (d), and optional step (c) where present, is sequentially applied by brush-coating in one or more passes over the underlying structure.

26. The process of any of claims 19 to 24, wherein each metallurgical composition applied in steps (b) and (d), and optional step (c) where present, is sequentially applied by spray-coating in one or more passes over the underlying structure.

27. The process of any of claims 19 to 26, wherein composition (i) applied in step (b) comprises compounds of ruthenium, tin and titanium in amounts providing the composition (i) with the overall metallic stoichiometry Ru_{0.3} (Sn+Ti)_{0.70}.

28. The process of claim 27, wherein composition (i) applied in step (b) comprises compounds of ruthenium, tin and titanium in amounts providing the composition (i) with the overall metallic stoichiometry Ru_{0.3}Sn_{0.35}Ti_{0.35}.

29. The process of any of claims 19 to 28, wherein the cobalt oxide crystalline particles in composition (iii) applied in step (d) consist essentially of crystalline cobalt oxide having the chemical formula Co₃O₄.

30. The process of claim 29 wherein the cobalt oxide crystalline particles in composition (iii) further consist essentially of ruthenium to the level of at most 5 atom % of ruthenium based on the total metal atom content of the crystalline particles, at least some of said ruthenium being present in the form of surface decoration on the crystalline particles.

31. The process of claim 29 or claim 30, wherein the cobalt oxide crystalline particles in composition (iii) further contain crystalline regions wherein some ruthenium has become incorporated within the crystal lattice of the cobalt oxide, or has formed a mixed metal oxide with cobalt, or both.

32. The process of any of claims 19 to 31 wherein, in composition (iii) applied in step (d), the cobalt oxide crystalline particles are dispersed in a mixture of compounds of antimony and tin, wherein the overall metallic stoichiometric ratio of cobalt : total of antimony and tin in composition (iii) is in the range of 20:80 to 80:20 , and is preferably 50:50.

33. The process of claim 32 wherein, in composition (iii), the compounds of antimony and tin are present in amounts providing composition (iii) with an overall metallic stoichiometric ratio of antimony : tin of at most 1:10, and preferably of at most 1:20.

34. The process of claim 33 wherein, in composition (iii) applied in step (d), the compounds of antimony and tin are present in amounts providing composition (iii) with an overall stoichiometric ratio of antimony : tin of 1:200 or less.

35. The process of any of claims 19 to 34 wherein the composition (iii) additionally comprises at least one compound of palladium, in an amount providing composition (iii) with an overall palladium content of preferably at most 7 atom%, and preferably at most 5 atom%, based on the total metal atom content of composition (iii).

36. The process of any of claims 19 to 35 wherein the ruthenium, tin, and titanium compounds present in composition (i), the tin and antimony compounds where present in composition (iii), and the ruthenium compounds present in optional composition (ii), each comprise compounds other than oxide compounds; and wherein their heat treatment and, where present, their heated application in steps (b) and (d), and optional step (c), , thermally decomposes these compounds into one or more of their respective metal oxide or mixed metal oxide compounds within the composite metallurgical layer of the final anode structure.

37. The process of claim 36, wherein the ruthenium, tin and titanium compounds present in composition (i) comprise, and preferably consist of, their respective halide or sulfate compounds, and/or complexes with acetylacetone; and wherein the tin and antimony compounds where present in composition (iii) comprise, and preferably consist of, their respective halide or sulfate compounds; and wherein the ruthenium present in composition (ii) where applied comprises, and preferably consists of, its respective halide compounds or complex with acetylacetone.

38. The process of any of claims 19 to 37 wherein the composition (iii) additionally comprises at least one compound of copper, or at least one compound of aluminium, or at least one compound of nickel, or more than one of the above, in amounts respectively providing composition (iii) with an overall copper content of at most 10 atom% , and preferably at most 2 atom%, based on the total metal atom content of composition (iii) ; or an overall aluminium content of at most 30 atom%, and preferably at most 20 atom% based on the total metal atom content of composition (iii); or an overall nickel content of at most 15 atom%, and preferably at most 10 atom% based on the total metal atom content of composition (iii); or more than one of the above.

39. The process of any of claims 19 to 38 wherein at least one of the compositions (i), (ii) or (iii) additionally comprises at least one compound of iridium, in an amount respectively providing an overall iridium content of at most 15 atom%, and preferably at most 10 atom%, based on the total metal atom content of that composition.

40. The process of any of claims 19 to 39, wherein the electrically conductive solid substrate consists essentially of a valve metal, preferably titanium.

41. An electro-chlorination system comprising the electrolytic anode structure of any of claims 1 to 18 or obtainable by the process of any of claims 19 to 40.

42. An electrolytic process for the evolution of chlorine gas from an aqueous solution containing chloride ions, which comprises passing an electrical current through said solution in an electrolytic cell comprising the electrolytic anode structure of any of claims 1 to 18 or obtainable by the process of any of claims 19 to 40, wherein chlorine gas is evolved from the aqueous solution at the anode.

43. The electrolytic process of claim 42, wherein chlorine gas evolution from the aqueous solution is promoted by the catalytic action of the composite metallurgical layer overlaying the surface of the anode.

44. The electrolytic process of claim 42 or 43, wherein the chlorine gas evolved by the process is used as a biocide to disinfect water.

45. The electrolytic process of claim 44, wherein the chlorine gas is used to disinfect ballast water, or industrial or municipal waste water.

46. The electrolytic process of claim 42 or 43, wherein the process is a chlor-alkali process for the generation and recovery of chlorine.
